# EUROPEAN PATENT SPECIFICATION

(11) **EP 1 887 069 B1**
(45) Date of publication and mention of the grant of the patent: **10.11.2010**
(21) Application number: 07013743.5
(22) Date of filing: 13.07.2007
(51) Int. Cl.: C09K 19/32, C09K 19/42

(54) **Bicyclooctyl reactive mesogens**
Bicyclooctylreaktive Mesogene
Mésogènes réactifs bicyclooctyles

(30) Priority: 11.08.2006 EP 06016777
(43) Date of publication of application: 13.02.2008
(73) Proprietor: Merck Patent GmbH, 64293 Darmstadt (DE)
(72) Inventor: Farrand, Louise Diane, Blandford Forum Dorset DT1 9ED (GB); Saxton, Patricia Eileen, Halterworth Romsey Hampshire SO51 8PB (GB); Adlem, Kevin, Bournemouth BH8 9LS (GB); Patrick, John, Warham BH20 4DH (GB); Dunn, Christopher J., Portswood Southampton SO14 6BD (GB)

(56) References cited:
- EP-A- 1 743 931
- WO-A-2005/080529
- DE-A1- 3 710 890
- DE-A1- 3 719 424
- DE-A1- 10 313 979
- GB-A- 2 027 027
- JP-A- 2003 327 966
- JP-A- 2005 015 473
- US-A- 5 055 223
- US-A1- 2006 061 699
- HIROTSUGU KIKUCHI, MASAYUKI YOKOTA, YOSHIAKI HISAKADO, HUAI YANG AND TISATO KAJIYAMA: "Polymer-stabilized liquid crystal blue phases" NATURE MATERIALS, ISSN 1476-1122, vol. 1, 2 September 2002 (2002-09-02), pages 64-68, XP008085834

## Description

### Field of the Invention

The invention relates to new bicyclooctyl reactive mesogens (RM), polymers derived thereof, liquid crystal (LC) media comprising them, and the use of the compounds, polymers and LC media in optical, electrooptical, electronic, semiconducting or luminescent components or devices, in decorative, security, cosmetic or diagnostic applications, especially for use in the polymer stabilised blue phase.

### Background and Prior Art

Prior art describes liquid crystal displays (LCD), and liquid crystalline light modulation media, which are in the optically isotropic blue phase when being operated in a display application. Such displays are disclosed for example in DE 103 13 979 A1 or the corresponding applications WO 04/046805 A1 and US 2006/0050354 A1. The operating voltage of these media is almost temperature-independent in the blue phase region, while it dramatically increases with increasing temperature in the isotropic phase (Kerr effect). However, the limitation for the application of this type of displays is the insufficient temperature range of the blue phase.

Blue phases are typically observed in highly chiral single mesogenic compounds or mixtures but generally over a very small range - typically less than 1°C. In order to operate novel fast switching display modes that operates in the blue phase, it is necessary to have a mixture that possesses as wide a blue phase as possible, typically from -20 to +60°C. Other typical liquid crystal properties necessary for display applications are also required.

To achieve broader blue phases, prior art suggests to add polymerisable compounds to the LC medium which are then polymerised in-situ. The polymer or polymer network thereby formed is reported to stabilise the blue phase of the LC medium.

Kikuchi, H. et al., Polymeric Materials Science and Engineering (2002), 1 (1), 64-68 and Kikuchi, H. et al., Polymeric Materials Science and Engineering, (2003), 89, 90-91 describe in-situ polymerisation to stabilise the blue phase over a temperature range that is 60°C wide and includes ambient temperature (-67 to 53°C) and, respectively, over a temperature range that is 120°C wide and includes room temperature (-73 to 53°C). This is achived by using a non-mesogenic mono-reactive monomer, such as 2-ethyl hexyl acrylate, together with a difunctional reactive mesogen (RM), e.g. RM257 which is commercially available from Merck KGaA, in a nematic LC host mixture.

H. Kikuchi et al, Nature Materials (2002), 1(1), 64-68 describes in-situ polymerisation to stabilise the blue phase over 60°C including room temperature (-67 to 53°C) using RM257 and a non-mesogenic reactive monomer such as 2-ethyl hexyl acrylate.

JP 2003-327966 A describes a composite LC for use as optical modulation element with specific composition, comprising a low molecular weight LC, which possesses a blue phase, and a polymer network within this medium obtained by polymerisation of non-liquid crystalline monomers alongside with a cross-linking agent RM257. In particular, the preferred embodiment is for branched monoacrylate monomers with alkyl groups in the side-chain.

WO 2005/090520 A1 describes an 'invisible' polymer stabilised blue phase and again specifically mentions that non-liquid crystalline monomers are preferred.

WO 2005/080529 A1 describes polymer stabilised blue phase using mono- and multireactive monomers, but uses only non-mesogenic monoreactive monomers.

The above methods and systems according to prior art do specifically mention that they utilise either a a non-mesogenic monomer or a combination of RM257 and a non-mesogenic monomer. However, these systems have significant drawbacks. In particular by using non-mesogenic monomers, the structure of the forming polymer has significantly different physical properties from the monomers and the LC host mixture. There is a need to stop and change the temperature at which the photopolymerisation is done many times, thus making this method a difficult and time-expensive process to undergo and difficult to reproduce.

In addition, the use of non-mesogenic monomers such as 2-ethylhexylacrylate can be problematic due to the volatile nature of the compound, leading to problems of loss due to evaporation and inhomogeniety of the mixed monomer/host system.

Also, the use of non-mesogenic compounds can severely lower the clearing point of the LC host, leading to a much smaller width of polymer stabilised blue phase, which is not desirable for display applications.

Moreover, the above prior art documents describe LC media that are based on a crude cyano-based mesogenic host, which has a poor high voltage holding ratio (VHR).

There is therefore a need to find materials that stabilises the blue phase over a wide temperature range, and which possess desirable properties such as fast switching, good voltage holding ratio, low voltage, high clearing point, and high stability to light and temperature.

The invention has the aim of providing improved methods and materials, in particular new RMs and LC mixtures comprising them, to achieve polymer stabilised blue phases, which do not have the above-mentioned disadvantages of methods and materials described in prior art. Another aim of the invention is to extend the pool of RM materials available to the expert. Other aims are immediately evident to the expert from the following description.

Surprisingly, it has been found that by using an RM comprising a bicyclooctyl core, a stabilised LC blue phase which has a broad temperature range, extremely fast switching times, very high voltage holding ratio and low voltage can be achieved.

In addition, by using a total RM system (i.e. all the monomers are rod-like) a high clearing point can be maintained, and polymerisation can be carried out at a single temperature, enabling a production friendly process.

The bicyclooctyl core of the RM also appears to be stable to the UV light used in the polymerisation process. The resultant polymer stabilised blue phase therefore has a high voltage holding ratio (VHR).

Also, it has been found that by using bicyclooctyl RMs in combination with an LC host comprising fluorophenyl LC compounds, the RMs do effectively stabilise this host to give a high VHR, which is necessary for state-of-the-art LCDs.

JP 2005-15473 discloses RMs of a broad formula and does also disclose some RMs comprising a bicyclooctyl ring, however, compounds as claimed in the present invention are not shown.

US 5,055,223 discloses bicyclooctyl compounds with a terminal SF₅ group, but does not disclose compounds with a terminal alkyl or alkoxy group or with two terminal polymerizable groups.

GB 2 027 027 A discloses unpolymerisable LC compounds with a bicyclooctyl ring and a terminal CN group. DE 37 10 890 A1 discloses unpolymerisable LC compounds with a bicyclooctyl ring and a terminal halogen group. DE 37 19 424 A1 discloses LC compounds with a bicyclooctyl ring and a terminal NCO group, and a generic formula encompassing side groups like acryloyloxy. However, these documents do not provide any hint to reactive mesogens or polymer stabilised blue phases.

### Summary of the Invention

The invention relates to compounds of formula I (bicyclooctyl RMs)

R¹-A-(B)_{b}-R² I

wherein
- R¹ and R²: are independently of each other selected from straight-chain or branched alkyl or alkoxy having 1 to 12 C-atoms that is optionally fluorinated, or denote P-Sp-, with at least one of R¹ and R² being P-Sp-,
- R⁰and R⁰⁰: independently of each other denote H or alkyl with 1 to 12 C-atoms,
- P: is a polymerisable group,
- Sp: is a spacer group or a single bond,
- A: is 1,4-bicyclo[2.2.2]octylene,
- B: is 1,4-cyclohexylene, 1,4-phenylene that is substituted with one or more groups L, or 1,4-bicyclo[2.2.2]octylene,
- L: is selected from F, Cl, Br, I, -CN, - NO₂ , -NCO, -NCS, -OCN, -SCN, -C(=O)NR⁰R⁰⁰, -C(=O)X,-C(=O)OR⁰, -C(=O)R⁰, -NR⁰R⁰⁰, -OH, -SF₅, optionally substituted silyl, aryl with 1 to 12, preferably 1 to 6 C atoms, and straight chain or branched alkyl, alkoxy, alkylcarbonyl, alkoxycarbonyl, alkylcarbonlyoxy or alkoxycarbonyloxy with 1 to 12, preferably 1 to 6 C atoms, wherein one or more H atoms are optionally replaced by F or Cl, wherein R⁰ and R⁰⁰ are as defined above and X is halogen,
- b: is 0 or 1.

The invention further relates to an LC material comprising one or more compounds of formula I.

The invention further relates to an LC medium comprising the following components
a) one or more unpolymerisable, mesogenic or liquid crystalline compounds,
b) one or more polymerisable, mesogenic or liquid crystalline compounds of formula I,
c) optionally one or more additional polymerisable, mesogenic or liquid crystalline compounds,
wherein said mixture comprises one or more chiral compounds, which can be compounds of components a, b or c or can form an additional component d.

The invention further relates to an LC medium as described above,
wherein said LC medium has a blue phase.

The invention further relates to an LC medium having a blue phase as described above, wherein the temperature range of the blue phase is broadened by in-situ polymerisation of component b, and, if present, component c, at a temperature at which the unpolymerised LC medium exhibits a blue phase.

The invention further relates to a method of stabilising the blue phase of an LC medium as described above and below.

The invention further relates to an electrooptical cell comprising two plane-parallel substrates, at least one of which is transparent to visible light, and at least one of which comprises an electrode layer, and further comprising an LC medium as described above and below.

The invention further relates to a polymerisable material, preferably a polymerisable LC material, comprising one or more compounds of formula I and optionally comprising one or more further compounds that can be polymerisable and/or mesogenic or liquid crystalline.

The invention further relates to an anisotropic polymer obtained by polymerising a compound of formula I or a polymerisable material as described above, preferably in its oriented state in form of a thin film.

The invention further relates to the use of compounds, materials and polymers as described above and below in electrooptical displays, LCDs, optical films, polarisers, compensators, beam splitters, reflective films, alignment layers, colour filters, holographic elements, hot stamping foils, coloured images, decorative or security markings, LC pigments, adhesives, cosmetics, diagnostics, non-linear optics, optical information storage, electronic devices, organic semiconductors, field effect transistors (FET), components of integrated circuitry (IC), thin film transistors (TFT), Radio Frequency Identification (RFID) tags, organic light emitting diodes (OLED), electroluminescent displays, lighting devices, photovoltaic devices, sensor devices, electrode materials, photoconductors, electrophotographic recording, lasing materials or devices.

The invention further relates to the use of the compounds, materials and polymers as described above and below for polymer stabilised blue phases.

### Terms and Definitions

The term "film" includes rigid or flexible, self-supporting or freestanding films with mechanical stability, as well as coatings or layers on a supporting substrate or between two substrates.

The term "reactive mesogen" (RM) means a polymerisable mesogenic or liquid crystal compound.

The term "liquid crystal or mesogenic material" or "liquid crystal or mesogenic compound" means materials or compounds comprising one or more rod- or board-shaped (calamitic) or disk-shaped (discotic) mesogenic groups, i.e. groups with the ability to induce liquid crystal (LC) phase behaviour. The compounds or materials comprising mesogenic groups do not necessarily have to exhibit an LC phase themselves. It is also possible that they show LC phase behaviour only in mixtures with other compounds, or when the mesogenic compounds or materials, or the mixtures thereof, are polymerised.

For the sake of simplicity, the term "liquid crystal material" is used hereinafter for both mesogenic and LC materials.

Polymerisable compounds with one polymerisable group are also referred to as "monoreactive" compounds, compounds with two polymerisable groups as "direactive" compounds, and compounds with more than two polymerisable groups as "multireactive" compounds. Compounds without a polymerisable group are also referred to as "non-reactive" compounds.

### Detailed Description of the Invention

By using RMs comprising a bicyclooctyl core unit, optionally in combination with other RMs, it is possible to extend the blue phase range by in-situ photopolymerisation. The blue phase range thereby achieved is stable from temperatures below -20°C up to about +40°C to +50°C depending on the structure of the RM used and on the host mixture.

The RMs can be chiral or achiral, and can comporise an acrylate/methacrylate group or an other polymerisable group.

The RMs can be monoreactive or di- or multireactive. Especially preferred is a material comprising at least one direactive compound (cross-linking agent), which is also preferably liquid crystalline with a functional group at each end; for instance it can be based on diacrylate type RMs.

The host mixture contains low molar mass LC components and also a sufficient amount of chiral dopant so that a blue phase can be induced. However, without polymer stabilisation the blue phase range typically exists only within a temperature range of less than 3°C. The stabilisation of the blue phase is carried out by adding to the chiral LC host mixture one or more RMs, preferably a mixture comprising monoreactive and direactive RMs, plus a suitable photoinitiator, and polymerising the RMs, for example by UV irradiation, for a short time. Preferably the polymerisation is carried out in electro-optical cells maintained at a temperature in the blue phase of the LC host mixture.

The bicyclooctyl RMs of formula I are particularly useful for stabilising an LC host comprising fluorinated phenyl derivatives (so-called 'super fluorinated mixture' host or 'SFM' host), which gives a better holding ratio compared e.g. to a liquid crystalline host based on cyanophenyl compounds.

This process is especially successful to stabilise the blue phase at low temperatures without phase separation occurring, and is almost always isothermal

The RMs of formula I can be prepared in a small number of steps from available liquid crystalline intermediates. They do greatly enhance the width of the blue phase by polymer stabilisation, typically from 1 K up to 60-70 K.

The resultant polymer stabilised blue phase achieved by using RMs of formula I shows extremely fast switching times, typically less than 5 msec, over a broad temperature range. This is a considerable improvement that has not been reported in prior art.

The structure of the bicyclooctyl core of the RMs of formula I has high stability against light and high temperatures. As a result the polymer stabilised blue phase has a high VHR.

The bicyclooctyl RMs of formula I are adaptable and have been shown to successfully stabilise SFM LC hosts and mixed LC hosts suitable meeting the requirements for display applications. In contrast, the systems reported in prior art use hosts based on cyano compounds, which have a limited stability.

By using a polymerisable materials consisting exclusively of RMs, i.e. all the reactive monomers are mesogens, preferably rod-like mesogens, it is possible to maintain a high clearing point of the LC mixture. In addition, it is possible to polymerise at a single temperature, thereby enabling a production friendly process. In contrast, the systems reported in prior art use non-mesogenic monoacrylates, requiring a multi-step, complicated and time consuming process of photopolymerisation.

The bicyclooctyl core of the RMs of formula I also has higher stability to the UV light used in the polymerisation process. The resultant polymer stabilised blue phase therefore has a high voltage holding ratio.

The RMs of formula I are especially useful as monomers to polymer stabilise the liquid crystalline blue phase for use in LCD, photonic or security applications. However, they can also be used in other typical RM applications known from prior art, for example for the preparation of optical films, in particular optical retardation or compensation films, alignment layers or polarisers in LCDs. They are also useful as monomers in the formation of security film products. Thexy can also be used in semiconductors or charge transport materials, and polymeric films made from such compounds.

The RMs of formula I themselves do not necessarily have to exhibit an LC phase. However, as they are partially consisting of a rod like structure they do not diminish the electro-optical properties of the LC host in to which they are dissolved, for example clearing points are not significantly lowered.

For the above applications it is also possible to copolymerise the RMs of formula I with other RMs that are known from prior art, or with other polymerisable compounds.

Especially preferred are compounds of formula I, wherein
- one of R¹ and R² is P-Sp- and the other is an unpolymerisable group,
- both R¹ and R² are selected from identical or different groups P-Sp-,
- R¹ or R² is alkyl or alkoxy with 1 to 12 C atoms that is optionally fluorinated,
- R¹ and/or R² is a chiral group,
- one or both of the groups Sp are a chiral group,
- P-Sp- is P-(CH₂)ₙ-(O)ₒ- with n being an integer from 1 to 12, preferably 1 to 6, and o being 0 or 1,
- B is substituted phenyl.

Particular preferably B is selected from 1,4-cyclohexylene, or substituted 1,4-phenylene.

If B is substituted it is substituted by one or more groups L, with L having one of the meanings given in formula I L is selected from F, Cl, Br, I, -CN, - NO₂, -NCO, -NCS, -OCN, -SCN, -C(=O)NR⁰R⁰⁰, -C(=O)X, - C(=O)OR⁰, -C(=O)R⁰, -NR⁰R⁰⁰, -OH, -SF₅, optionally substituted silyl, aryl with 1 to 12, preferably 1 to 6 C atoms, and straight chain or branched alkyl, alkoxy, alkylcarbonyl, alkoxycarbonyl, alkylcarbonlyoxy or alkoxycarbonyloxy with 1 to 12, preferably 1 to 6 C atoms, wherein one or more H atoms are optionally replaced by F or Cl, wherein R⁰ and R⁰⁰ are as defined in formula I and X is halogen.

More preferably L is selected from F, Cl, CN, NO₂ or straight chain or branched alkyl, alkoxy, alkylcarbonyl, alkoxycarbonyl, alkylcarbonlyoxy or alkoxycarbonyloxy with 1 to 12 C atoms, wherein the alkyl groups are optionally perfluorinated.

Most preferably L is selected from F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂ or OC₂F₅, in particular F, Cl, CN, CH₃, C₂H₅, C(CH₃)₃, CH(CH₃)₂, OCH₃, COCH₃ or OCF₃, most preferably F, Cl, CH₃, C(CH₃)₃, OCH₃ or COCH₃.

If B is substituted phenyl, it is preferably selected from 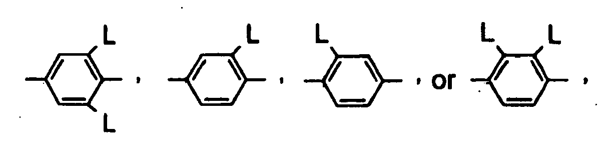 with L having each independently one of the meanings given above.

An alkyl or alkoxy radical, i.e. where the terminal CH₂ group is replaced by -O-, can be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one CH₂ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

An alkyl group wherein one or more CH₂ groups are replaced by - CH=CH- can be straight-chain or branched. It is preferably straight-chain, has 2 to 10 C atoms and accordingly is preferably vinyl, prop-1-, or prop-2-enyl, but-1-, 2- or but-3-enyl, pent-1-, 2-, 3- or pent-4-enyl, hex-1-, 2-, 3-, 4- or hex-5-enyl, hept-1-, 2-, 3-, 4-, 5- or hept-6-enyl, oct-1-, 2-, 3-, 4-, 5-, 6- or oct-7-enyl, non-1-, 2-, 3-, 4-, 5-, 6-, 7- or non-8-enyl, dec-1-, 2-, 3-, 4-, 5-, 6-, 7-, 8- or dec-9-enyl.

Especially preferred alkenyl groups are C₂-C₇-1E-alkenyl, C₄-C₇-3E-alkenyl, C₅-C₇-4-alkenyl, C₆-C₇-5-alkenyl and C₇-6-alkenyl, in particular C₂-C₇-1 E-alkenyl, C₄-C₇-3E-alkenyl and C₅-C₇-4-alkenyl. Examples for particularly preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 C atoms are generally preferred.

In an alkyl group wherein one CH₂ group is replaced by -O- and one by -CO-, these radicals are preferably neighboured. Accordingly these radicals together form a carbonyloxy group -CO-O- or an oxycarbonyl group -O-CO-. Preferably this group is straight-chain and has 2 to 6 C atoms. It is accordingly preferably acetyloxy, propionyloxy, butyryloxy, pentanoyloxy, hexanoyloxy, acetyloxymethyl, propionyloxymethyl, butyryloxymethyl, pentanoyloxymethyl, 2-acetyloxyethyl, 2-propionyloxyethyl, 2-butyryloxyethyl, 3-acetyloxypropyl, 3-propionyloxypropyl, 4-acetyloxybutyl, methoxycarbonyl, ethoxycarbonyl, propoxycarbonyl, butoxycarbonyl, pentoxycarbonyl, methoxycarbonylmethyl, ethoxycarbonylmethyl, propoxycarbonylmethyl, butoxycarbonylmethyl, 2-(methoxycarbonyl)ethyl, 2-(ethoxycarbonyl)ethyl, 2-(propoxycarbonyl)ethyl, 3-(methoxycarbonyl)propyl, 3-(ethoxycarbonyl)propyl, 4-(methoxycarbonyl)-butyl.

An alkyl group wherein two or more CH₂ groups are replaced by -O-and/or -COO- can be straight-chain or branched. It is preferably straight-chain and has 3 to 12 C atoms. Accordingly it is preferably bis-carboxy-methyl, 2,2-bis-carboxy-ethyl, 3,3-bis-carboxy-propyl, 4,4-bis-carboxy-butyl, 5,5-bis-carboxy-pentyl, 6,6-bis-carboxy-hexyl, 7,7-bis-carboxy-heptyl, 8,8-bis-carboxy-octyl, 9,9-bis-carboxy-nonyl, 10,10-bis-carboxy-decyl, bis-(methoxycarbonyl)-methyl, 2,2-bis-(methoxycarbonyl)-ethyl, 3,3-bis-(methoxycarbonyl)-propyl, 4,4-bis-(methoxycarbonyl)-butyl, 5,5-bis-(methoxycarbonyl)-pentyl, 6,6-bis-(methoxycarbonyl)-hexyl, 7,7-bis-(methoxycarbonyl)-heptyl, 8,8-bis-(methoxycarbonyl)-octyl, bis-(ethoxycarbonyl)-methyl, 2,2-bis-(ethoxycarbonyl)-ethyl, 3,3-bis-(ethoxycarbonyl)-propyl, 4,4-bis-(ethoxycarbonyl)-butyl, 5,5-bis-(ethoxycarbonyl)-hexyl.

An alkyl or alkenyl group that is monosubstituted by CN or CF₃ is preferably straight-chain. The substitution by CN or CF₃ can be in any desired position.

An alkyl or alkenyl group that is at least monosubstituted by halogen is preferably straight-chain. Halogen is preferably F or Cl, in case of multiple substitution preferably F. The resulting groups include also perfluorinated groups. In case of monosubstitution the F or Cl substituent can be in any desired position, but is preferably in ω -position. Examples for especially preferred straight-chain groups with a terminal F substituent are fluoromethyl, 2-fluorethyl, 3-fluorpropyl, 4-fluorbutyl, 5-fluorpentyl, 6-fluorhexyl and 7-fluorheptyl. Other positions of F are, however, not excluded.

Halogen is preferably F or Cl.

R¹ or R² can be an achiral or a chiral group. In a preferred embodiment it is a chiral group, very preferably selected of formula II: 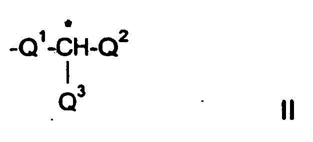 wherein
- Q¹: is alkylene or alkylene-oxy with 1 to 9 C atoms, arylene or heteroarylene as defined above, or a single bond,
- Q²: is alkyl or alkoxy with 1 to 10 C atoms which may be unsubstituted, mono- or polysubstituted by F, Cl, Br or CN, it being also possible for one or more non-adjacent CH₂ groups to be replaced, in each case independently from one another, by -C≡C-, -O-, -S-, -NH-, -N(CH₃)-, -CO-, -COO-, -OCO-, -OCO-O-, -S-CO- or -CO-S- in such a manner that oxygen atoms are not linked directly to one another, or aryl or heteroaryl as defined above, being different from Q¹ or Q³,
- Q³: is F, Cl, Br, CN or alkyl, alkoxy, aryl or heteroaryl as defined for Q² but being different from Q² or Q¹,

In case Q¹ in formula II is an alkylene-oxy group, the O atom is preferably adjacent to the chiral C atom.

Preferred chiral groups of formula II are 2-alkyl, 2-alkoxy, 2-methylalkyl, 2-methylalkoxy, 2-fluoroalkyl, 2-fluoroalkoxy, 2-(2-ethin)-alkyl, 2-(2-ethin)-alkoxy, 1,1,1-trifluoro-2-alkyl and 1,1,1-trifluoro-2-alkoxy.

Particularly preferred chiral groups are 2-butyl (=1-methylpropyl), 2-methylbutyl, 2-methylpentyl, 3-methylpentyl, 2-ethylhexyl, 2-propylpentyl, in particular 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy for example. Very preferred are 2-hexyl, 2-octyl, 2-octyloxy, 1,1,1-trifluoro-2-hexyl, 1,1,1-trifluoro-2-octyl and 1,1,1-trifluoro-2-octyloxy.

In addition, compounds containing an achiral branched group R¹ or R² may occasionally be of importance, for example, due to a reduction in the tendency towards crystallization. Branched groups of this type generally do not contain more than one chain branch.

Preferred achiral branched groups are isopropyl, isobutyl (=methylpropyl), isopentyl (=3-methylbutyl), isopropoxy, 2-methyl-propoxy and 3-methylbutoxy.

The polymerisable group P is a group that is capable of participating in a polymerisation reaction, like radical or ionic chain polymerisation, polyaddition or polycondensation, or capable of being grafted, for example by condensation or addition, to a polymer backbone in a polymer analogous reaction. Especially preferred are polymerisable groups for chain polymerisation reactions, like radical, cationic or anionic polymerisation. Very preferred are polymerisable groups comprising a C-C double or triple bond, and polymerisable groups capable of polymerisation by a ring-opening reaction, like oxetanes or epoxides.

Very preferably the polymerisable group P is selected from CH₂=CW¹-COO-, CH₂=CW¹-CO-, 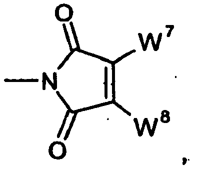 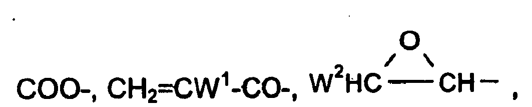 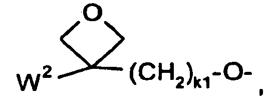 CH₂=CW²-(O)ₖ₁-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, and W⁴W⁵W⁶Si-, with W¹ being H, F, Cl, CN, CF₃, phenyl or alkyl with 1 to 5 C-atoms, in particular H, Cl or CH₃, W² and W³ being independently of each other H or alkyl with 1 to 5 C-atoms, in particular H, methyl, ethyl or n-propyl, W⁴, W⁵ and W⁶ being independently of each other Cl, oxaalkyl or oxacarbonylalkyl with 1 to 5 C-atoms, W⁷ and W⁸ being independently of each other H, Cl or alkyl with 1 to 5 C-atoms, Phe being 1,4-phenylene that is optionally substituted by one or more groups L as defined above, and k₁ and k₂ being independently of each other 0 or 1.

Especially preferred groups P are CH₂=CH-COO-, CH₂=C(CH₃)-COO-, CH₂=CH-, CH₂=CH-O-, (CH₂=CH)₂CH-OCO-, (CH₂=CH)₂CHO-,

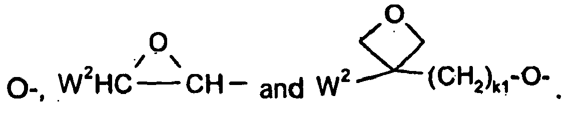

Especially preferably Pg is a vinyl group, an acrylate group, a methacrylate group, an oxetane group or an epoxy group, especially preferably an acrylate or methacrylate group.

Very preferred are acrylate and oxetane groups. Oxetanes produce less shrinkage upon polymerisation (cross-linking), which results in less stress development within films, leading to higher retention of ordering and fewer defects. Oxetane cross-linking also requires a cationic initiator, which unlike a free radical initiator is inert to oxygen.

As spacer group all groups can be used that are known for this purpose to the skilled in the art. The spacer group Sp is preferably of formula Sp'-X', such that P-Sp is P-Sp'-X'-, wherein
- Sp': is alkylene with 1 to 20 C atoms, preferably 1 to 12 C-atoms, which is optionally mono- or polysubstituted by F, Cl, Br, I or CN, and wherein one or more non-adjacent CH₂ groups are optionally replaced, in each case independently from one another, by -O-, -S-, -NH-, -NR⁰-, -SiR⁰R⁰⁰-, -CO-, -COO-,-OCO-, -OCO-O-, -S-CO-, -CO-S-, -NR⁰-CO-O-, -O-CO-NR⁰-,-NR⁰-CO-NR⁰-, -CH=CH- or -C≡C- in such a manner that O and/or S atoms are not linked directly to one another,
- X': is -O-, -S-, -CO-, -COO-, -OCO-, -O-COO-, -CO-NR⁰-, -NR⁰-CO-, -NR⁰-CO-NR⁰-, -OCH₂-, -CH₂O-, -SCH₂-, -CH₂S-, -CF₂O-,-OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY¹=CY²-, -C≡C-, -CH=CH-COO-,-OCO-CH=CH- or a single bond,
- R⁰ and R⁰⁰: are independently of each other H or alkyl with 1 to 12 C-atoms, and
- Y¹ and Y²: are independently of each other H, F, Cl or CN.
- X': is preferably -O-, -S -CO-, -COO-, -OCO-, -O-COO-, -CO-NR⁰-, - NR⁰-CO-, -NR⁰-CO-NR⁰- or a single bond.

Typical groups Sp' are, for example, -(CH₂)ₚ-, -(CH₂CH₂O)_{q}-CH₂CH₂-, - CH₂CH₂-S-CH₂CH₂- or -CH₂CH₂-NH-CH₂CH₂- or -(SiR⁰R⁰⁰-O)ₚ-, with p being an integer from 2 to 12, q being an integer from 1 to 3 and R⁰ and R⁰⁰ having the meanings given above.

Preferred groups Sp' are ethylene, propylene, butylene, pentylene, hexylene, heptylene, octylene, nonylene, decylene, undecylene, dodecylene, octadecylene, ethyleneoxyethylene, methyleneoxy-butylene, ethylene-thioethylene, ethylene-N-methyl-iminoethylene, 1-methylalkylene, ethenylene, propenylene and butenylene for example.

Sp and Sp' can be an achiral or a chiral group. In a preferred embodiment Sp or Sp' is a chiral group. Chiral groups Sp' are very preferably selected of formula III: 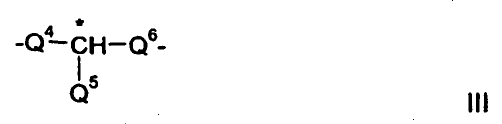 wherein
- Q⁴: is an alkylene or alkylene-oxy group with 1 to 9 C atoms or a single bond,
- Q⁵: is an alkyl or alkoxy group with 1 to 10 C atoms which may be unsubstituted, mono- or polysubstituted by F, Cl, Br or CN, it being also possible for one or more non-adjacent CH₂ groups to be replaced, in each case independently from one another, by -C≡C-, -O-, -S-, -NH-, -N(CH₃)-, -CO-, -COO-, -OCO-, -OCO-O-, -S-CO- or -CO-S- in such a manner that oxygen atoms are not linked directly to one another,
- Q⁶: is an alkylene or alkylene-oxy group with 1 to 10 C atoms or a single bond, being different from Q⁴,
with Q⁴ being linked to the polymerisable group P.

Further preferred are compounds with one or two groups P-Sp-wherein Sp is a single bond. In case of compounds with two groups P-Sp-, each of the two polymerisable groups P and the two spacer groups Sp can be identical or different.

Particularly preferred compounds of formula I are those of the following formulae 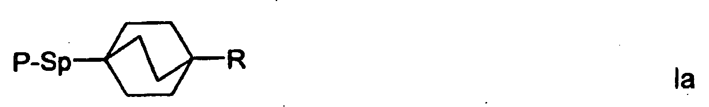 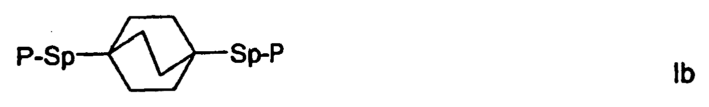 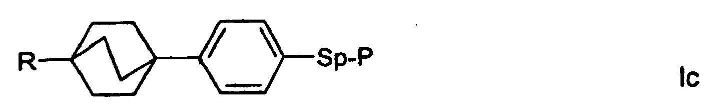 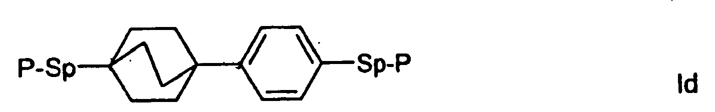 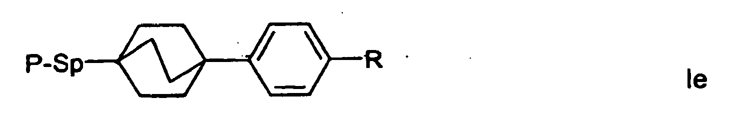 wherein P and Sp are as defined above, R has one of the meanings of R¹ as given above that is different from P-Sp-, and the phenyl ring is substituted by one or more groups L as defined above. Especially preferred are compounds of formula Ia and Ic.

Especially preferred compounds of formula Ic-Ie are the following: 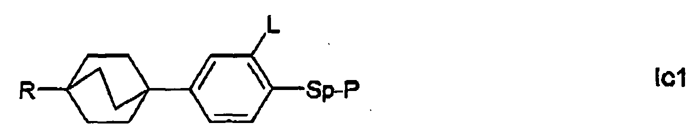 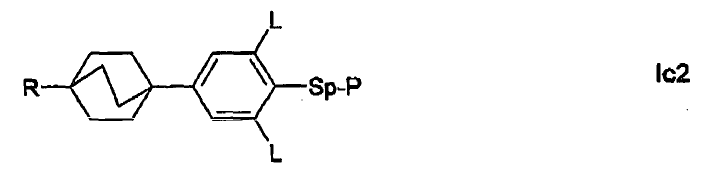 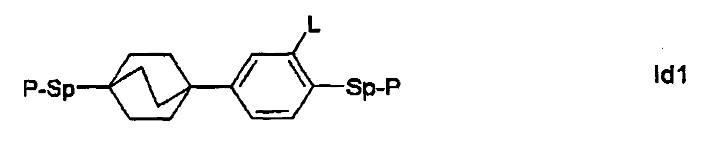 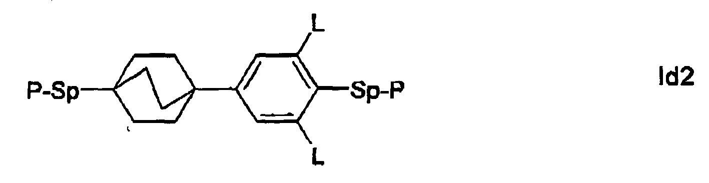 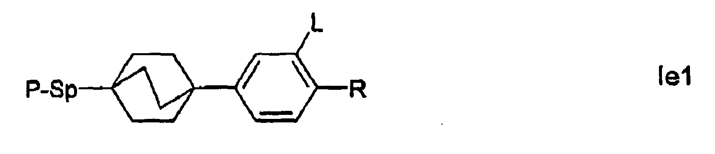 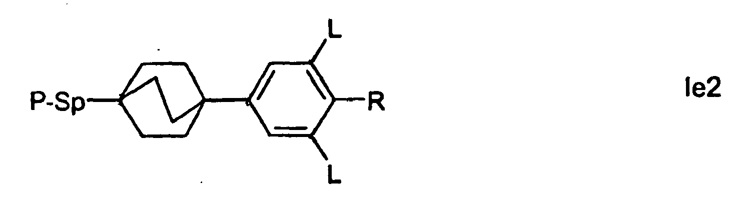 wherein P, Sp, R and L are as defined above.

In the above-mentioned preferred formulae L is very preferably F.

Furthermore, -Sp-P in these preferred formulae is preferably -COO-alkylene-P or -O-alkylene-P, wherein "alkylene" is straight-chain or branched alkylene, preferably with 1 to 12, very preferably 2 to 8 C-atoms, and which is optionally fluorinated but preferably unfluorinated.

R in these preferred formulae is very preferably straight-chain or branched alkyl, preferably with 1 to 12, very preferably 2 to 8 C-atoms, and is optionally fluorinated but preferably unfluorinated.

P in these preferred formulae is very preferably acrylate (i.e. -O-CO-CH=CH₂) or methacrylate (i.e. -O-CO-C(CH₃)=CH₂).

The compounds of formula I can be synthesized according to or in analogy to methods which are known per se and which are described in the literature and in standard works of organic chemistry such as, for example, Houben-Weyl, Methoden der organischen Chemie, Thieme-Verlag, Stuttgart. A suitable method of synthesis is shown below. 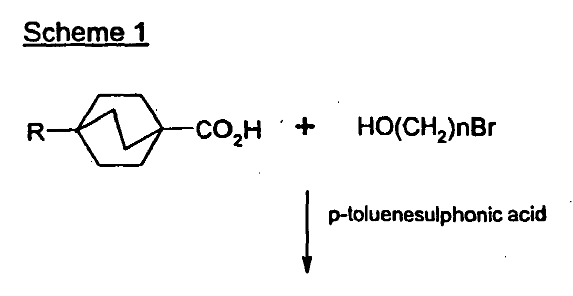 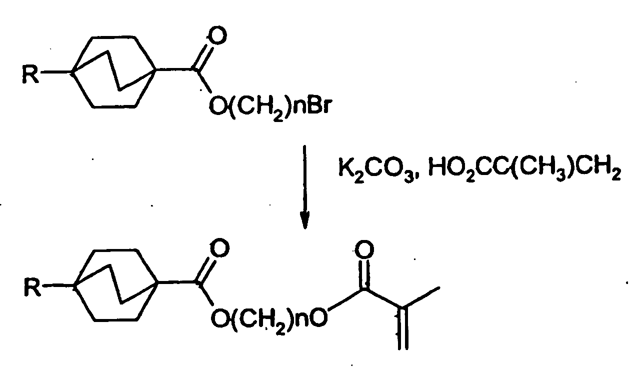 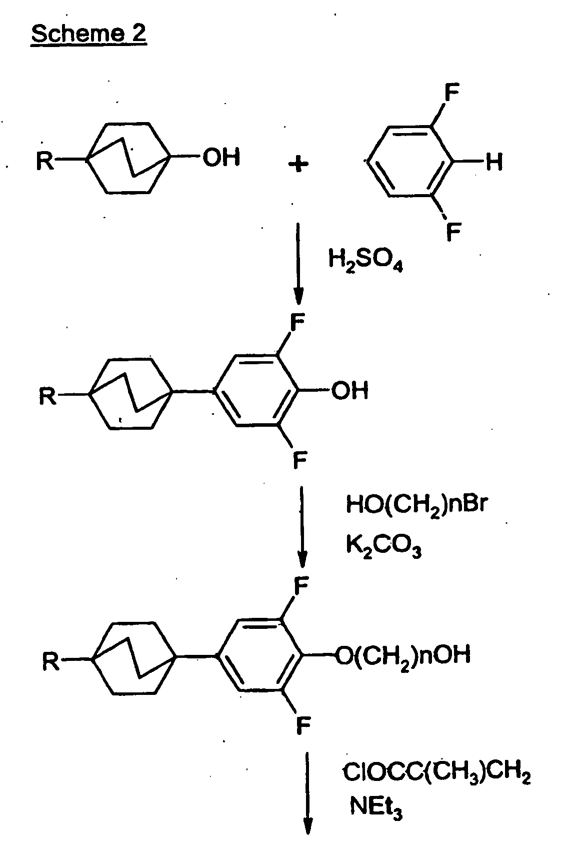 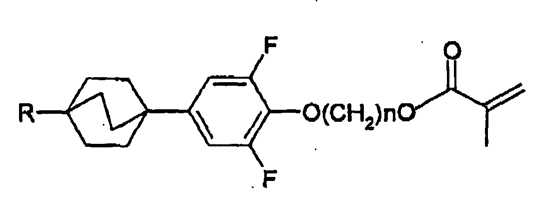 wherein R and n are as defined above.

The compounds of formula I are especially suitable for use in displays comprising a chiral LC medium operating in the isotropic or blue phase as described in DE 103 13 979 A1 or the corresponding applications WO 04/046805 A1 and US 2006/0050354 A1.

Thus, another aspect of the invention is an LC medium having a blue phase and comprising at least one compound of formula I. Yet another aspect of the invention is an LCD comprising such an LC medium.

Such an LC medium comprises preferably 0.1 to 20 %, very preferably 0.5 to 15 % and most preferably 1 to 8 % by weight of compounds of formula I. Preferably it comprises 1, 2 or 3 compounds of formula I.

LC host mixtures exhibiting a blue phase and display configurations for utilising these mixtures, which are suitable for use in the present invention, are disclosed in DE 103 13 979 A1, WO 04/046805 A1 and US 2006/0050354 A1.

In a preferred embodiment of the invention the LC medium is consisting of 2 to 25, preferably 3 to 15 compounds, at least one of which is a chiral compound of formula I. The other compounds are preferably low molecular weight LC compounds selected from nematic or nematogenic substances, for example from the known classes of the azoxybenzenes, benzylidene-anilines, biphenyls, terphenyls, phenyl or cyclohexyl benzoates, phenyl or cyclohexyl esters of cyclohehexanecarboxylic acid, phenyl or cyclohexyl esters of cyclohexylbenzoic acid, phenyl or cyclohexyl esters of cyclohexylcyclohexanecarboxylic acid, cyclohexylphenyl esters of benzoic acid, of cyclohexanecarboxylic acid and of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclo-hexylpyridazines, phenyl- or cyclohexyldioxanes, phenyl- or cyclohexyl-1,3-dithianes, 1,2-diphenyl-ethanes, 1,2-dicyclohexylethanes, 1-phenyl-2-cyclohexylethanes, 1-cyclohexyl-2-(4-phenylcyclohexyl)-ethanes, 1-cyclohexyl-2-biphenyl-ethanes, 1-phenyl2-cyclohexyl-phenylethanes, optionally halogenated stilbenes, benzyl phenyl ether, tolanes, substituted cinnamic acids and further classes of nematic or nematogenic substances. The 1,4-phenylene groups in these compounds may also be laterally mono- or difluorinated. The LC mixture is preferably based on achiral compounds of this type.

The most important compounds that can be used as components of the LC mixture can be characterized by the following formula

R'-L'-G'-E-R"

wherein L' and E, which may be identical or different, are in each case, independently from one another, a bivalent radical from the group formed by -Phe-, -Cyc-, -Phe-Phe-, -Phe-Phe-Phe-, -Phe-Cyc-, -Cyc-Cyc-, -Pyr-, -Dio-, -Pan-, -B-Phe-, -B-Phe-Phe- and -B-Cyc- and their mirror images, where Phe is unsubstituted or fluorine-substituted 1,4-phenylene, Cyc is trans-1,4-cyclohexylene or 1,4-cyclohexenylene, Pyr is pyrimidine-2,5-diyl or pyridine-2,5-diyl, Dio is 1,3-dioxane-2,5-diyl, Pan is pyrane-2,5-diyl and B is 2-(trans-1,4-cyclohexyl)ethyl, pyrimidine-2,5-diyl, pyridine-2,5-diyl, 1,3-dioxane-2,5-diyl, or pyrane-2,5-diyl.

G' in these compounds is selected from the following bivalent groups or their mirror images:
-CH=CH-, -CH=CY-, -CY=CY-, -C≡C-, -CH₂-CH₂-, -CF₂O-, -CH₂-O-, - CH₂-S-, -CO-O-, -CO-S- or a single bond, with Y being halogen, preferably F, or -CN.

R' and R" are, in each case, independently of one another, alkyl, alkenyl, alkoxy, alkenyloxy, alkanoyloxy, alkoxycarbonyl or alkoxycarbonyloxy with 1 to 18, preferably 3 to 12 C atoms, or alternatively one of R' and R" is F, CF₃, OCF₃, Cl, NCS or CN.

In most of these compounds R' and R" are, in each case, independently of each another, alkyl, alkenyl or alkoxy with different chain length, wherein the sum of C atoms in nematic media generally is between 2 and 9, preferably between 2 and 7.

Many of these compounds or mixtures thereof are commercially available. All of these compounds are either known or can be prepared by methods which are known per se, as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known per se, but are not mentioned here.

Suitable and preferred host mixtures are disclosed for example in WO 2005/019381 A1 and US 2006/0061699 A1 and the above-mentioned US 2006/0050354 A1.

In addition to the compounds of formula I the LC medium may comprise one or more further RMs. The amount of the additional RMs is preferably 0.1 to 20 %, very preferably 0.5 to 15 % and most preferably 5 to 15 % by weight (referring to the total amount of solid compounds in the medium). Preferably the LC medium comprises 1, 2 or 3 additional RMs.

The additional RMs are preferably calamitic monomers. These materials typically have good optical properties, like reduced chromaticity, and can be easily and quickly aligned into the desired orientation, which is especially important for the industrial production of polymer films at large scale. It is also possible that the polymerisable material comprises one or more discotic monomers. Very preferably the additional RMs are selected from the following formulae:

P-Sp-MG-R IVa

P-Sp-MG-Sp-P IVb

wherein P, Sp and R have the meanings given in formula I and MG is a rod-like core that is optionally chiral.

MG is preferably selected of formula V

-(A¹-Z¹)ₘ-A²- V

wherein
- A¹ and A²: are, in case of multiple occurrence independently of one another, an aromatic or alicyclic group, which optionally contains one or more heteroatoms selected from N, O and S, and is optionally mono- or polysubstituted by L as defined above,
- Z¹: in case of multiple occurrence independently of one another denotes -O-, -S-, -CO-, -COO-, -OCO-, -S-CO-, -CO-S-, -O-COO-, -CO-NR⁰-, -NR⁰-CO-, -NR⁰-CO-NR⁰⁰, -NR⁰-CO-O-, -O-CO-NR⁰-, -OCH₂-, -CH₂O-, -SCH₂-, - CH₂S-, -CF₂O-, -OCF₂-, -CF₂S-, -SCF₂-, -CH₂CH₂-, - (CH₂)₄-, -CF₂CH₂-, -CH₂CF₂-, -CF₂CF₂-, -CH=N-, - N=CH-, -N=N-, -CH=CR⁰-, -CY¹=CY²-, -C≡C-, -CH=CH-COO-, -OCO-CH=CH- or a single bond,
- R⁰ and R⁰⁰: independently of each other denote H or alkyl with 1 to 12 C-atoms,
- Y¹ and Y²: independently of each other denote H, F, Cl or CN,
- m: is 0, 1, 2, 3 or 4.

Preferred groups A¹ and A² include, without limitation, furan, pyrrol, thiophene, oxazole, thiazole, thiadiazole, imidazole, phenylene, cyclohexylene, bicyclooctylene, cyclohexenylene, pyridine, pyrimidine, pyrazine, azulene, indane, naphthalene, tetrahydronaphthalene, anthracene and phenanthrene, all of which are optionally substituted by one or more groups L.

Particular preferred groups A¹ and A² are selected from 1,4-phenylene, pyridine-2,5-diyl, pyrimidine-2,5-diyl, thiophene-2,5-diyl, naphthalene-2,6-diyl, 1,2,3,4-tetrahydro-naphthalene-2,6-diyl, indane-2,5-diyl, bicyclooctylene or 1,4-cyclohexylene wherein one or two non-adjacent CH₂ groups are optionally replaced by O and/or S, wherein these groups are unsubstituted, mono- or polysubstituted by L as defined above.

Preferred groups R, P and Sp are those listed above.

Another aspect of the invention is a polymerisable material comprising one or more compounds of formula I and one or more additional RMs, which are preferably selected from mono- and direactive RMs as described above.

The additional RMs can be prepared by methods which are known per se and which are described in standard works of organic chemistry like for example Houben-Weyl, Methoden der organischen Chemie, Thieme-Verlag, Stuttgart. Suitable RMs are disclosed for example in WO 93/22397, EP 0 261 712, DE 195 04 224, WO 95/22586, WO 97/00600, US 5,518,652, US 5,750,051, US 5,770,107 and US 6,514,578. Examples of particularly suitable and preferred RMs are shown in the following list. 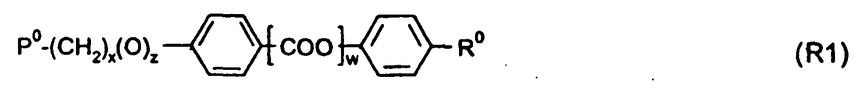 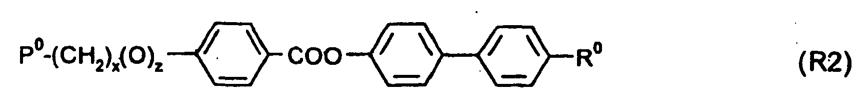 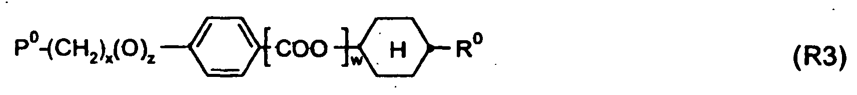 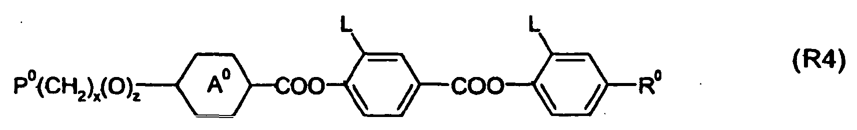 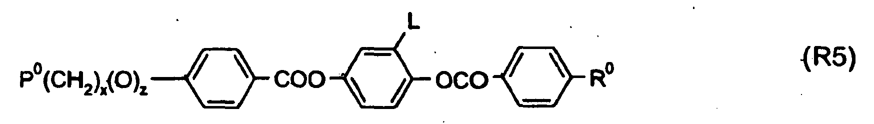 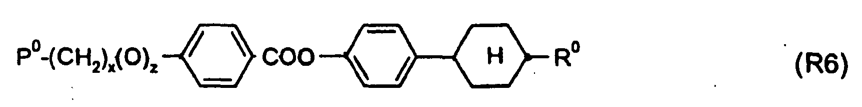 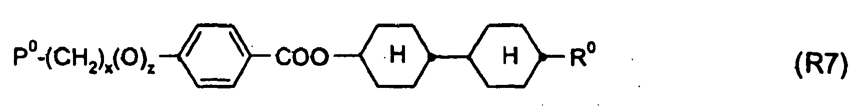 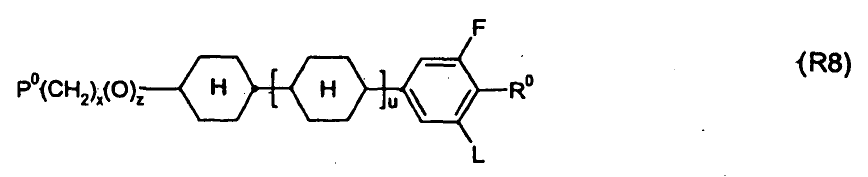 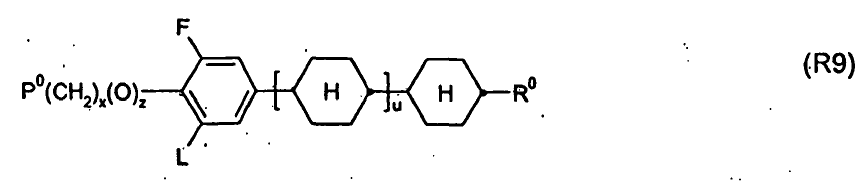 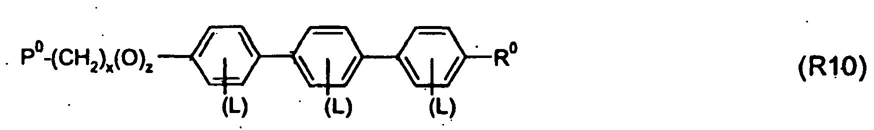 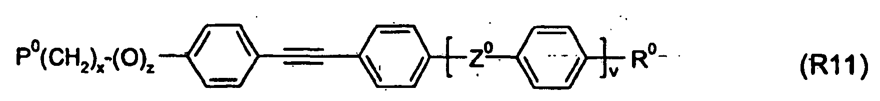 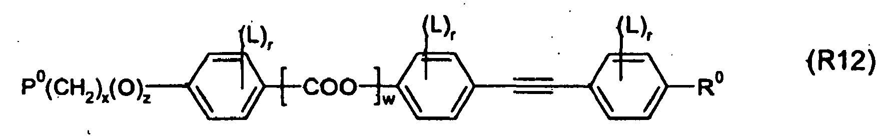 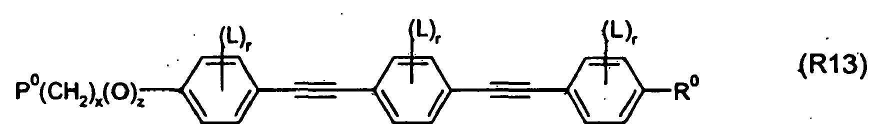 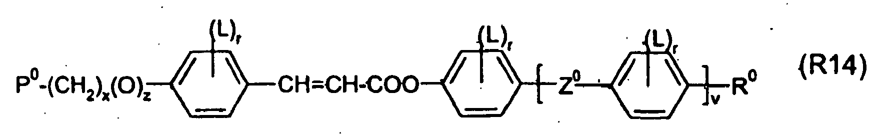 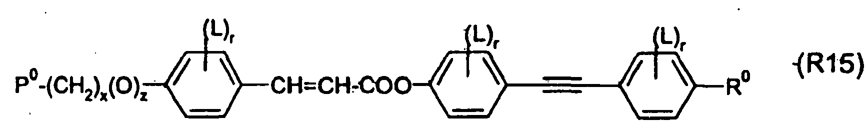 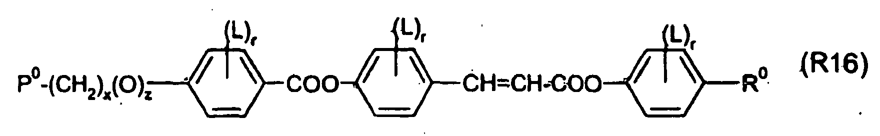 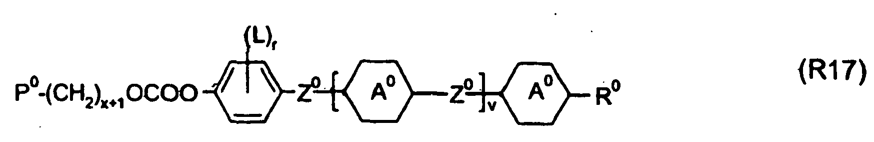 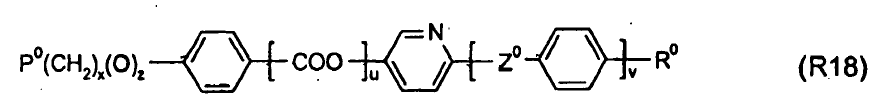 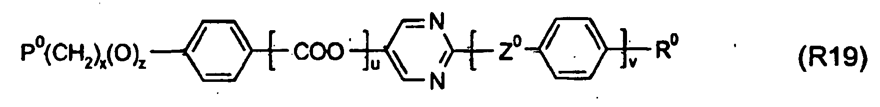 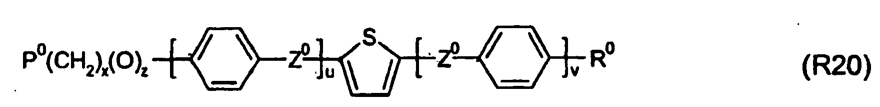 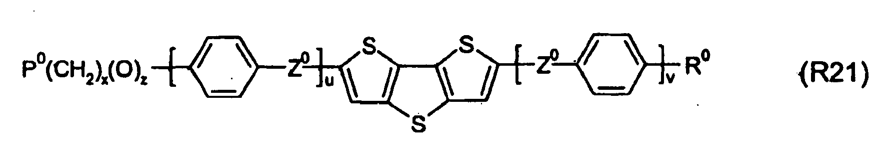 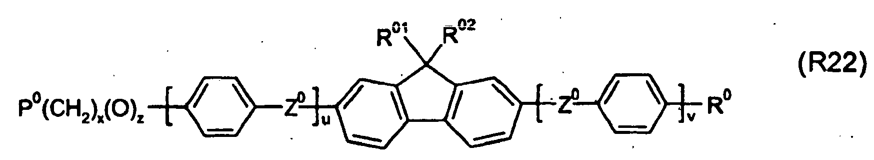 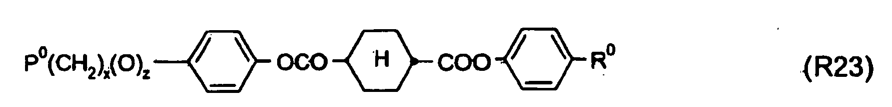 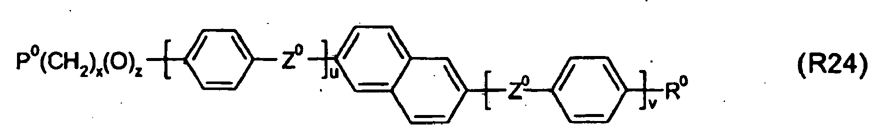 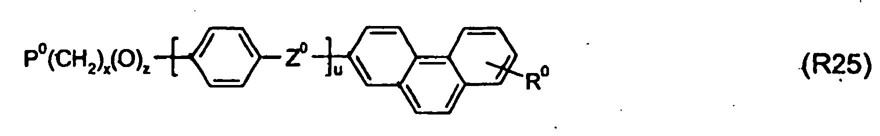 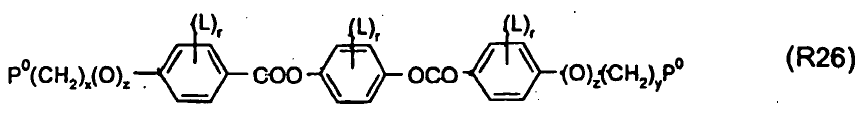 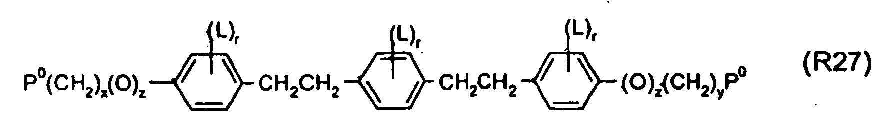 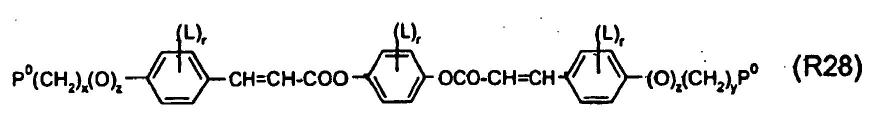 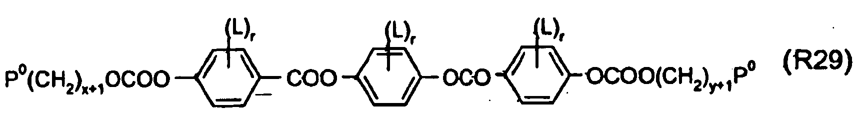 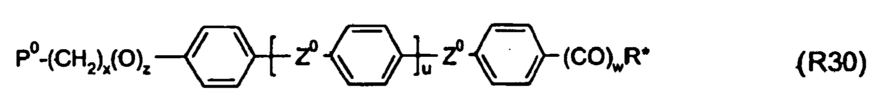 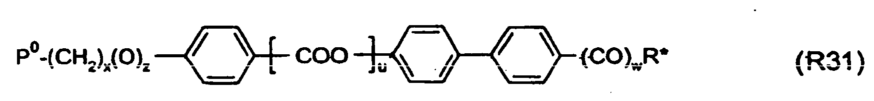 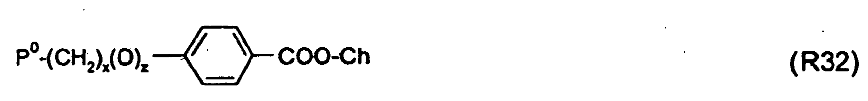 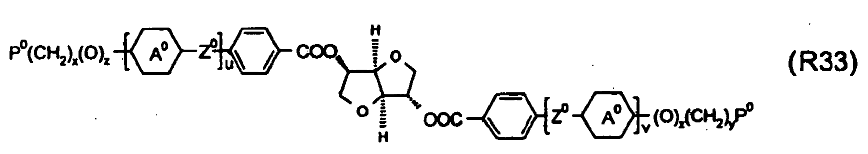 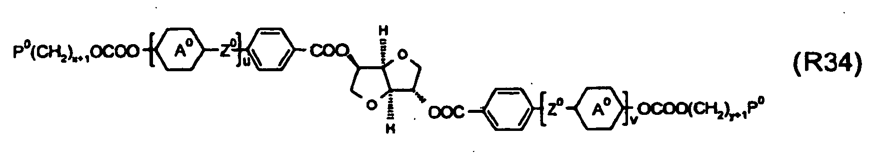 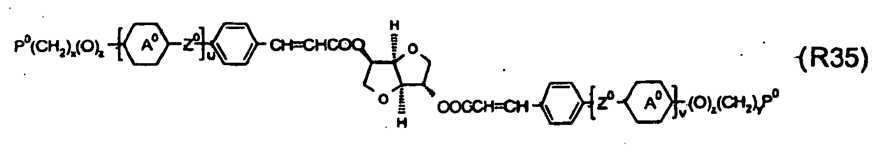 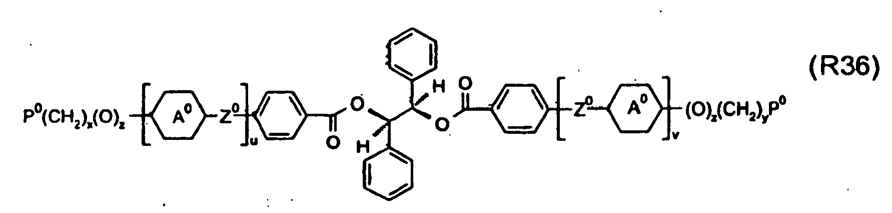 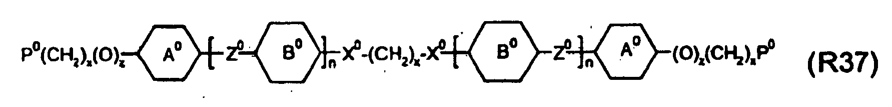 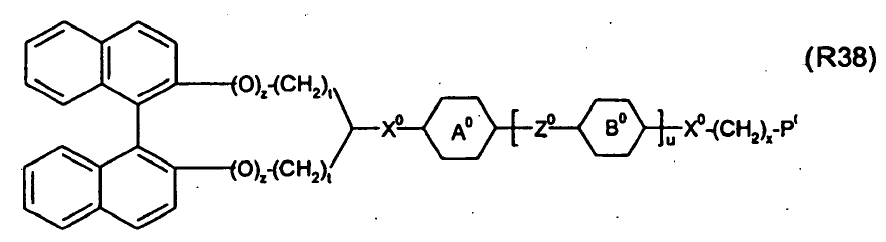 wherein
- P⁰: is, in case of multiple occurrence independently of one another, a polymerisable group, preferably an acryl, methacryl, oxetane, epoxy, vinyl, vinyloxy, propenyl ether or styrene group,
- A⁰ and B⁰: are, in case of multiple occurrence independently of one another, 1,4-phenylene that is optionally substituted with 1, 2, 3 or 4 groups L, or trans-1,4-cyclohexylene,
- Z⁰: is, in case of multiple occurrence independently of one another, -COO-, -OCO-, -CH₂CH₂-, -C≡C-, -CH=CH-, - CH=CH-COO-, -OCO-CH=CH- or a single bond,
- R⁰: is alkyl, alkoxy, thioalkyl, alkylcarbonyl, alkoxycarbonyl, alkylcarbonyloxy or alkoxycarbonyloxy with 1 or more, preferably 1 to 15 C atoms which is optionally fluorinated, or is Y⁰ or P-(CH₂)_{y}-(O)_{z}-,
- Y⁰: is F, Cl, CN, NO₂, OCH₃, OCN, SCN, SF₅, optionally fluorinated alkylcarbonyl, alkoxycarbonyl, alkylcarbonyloxy or alkoxycarbonyloxy with 1 to 4 C atoms, or mono- oligo-or polyfluorinated alkyl or alkoxy with 1 to 4 C atoms,
- R^{01,02}: are independently of each other H, R⁰ or Y⁰,
- R*: is a chiral alkyl or alkoxy group with 4 or more, preferably 4 to 12 C atoms, like 2-methylbutyl, 2-methyloctyl, 2-methylbutoxy or 2-methyloctoxy,
- Ch: is a chiral group selected from cholesteryl, estradiol, or terpenoid radicals like menthyl or citronellyl,
- L: is, in case of multiple occurrence independently of one another, H, F, Cl, CN or optionally halogenated alkyl, alkoxy, alkylcarbonyl, alkoxycarbonyl, alkylcarbonyloxy or alkoxycarbonyloxy with 1 to 5 C atoms,
- r: is 0, 1, 2, 3 or 4,
- t: is, in case of multiple occurrence independently of one another, 0, 1, 2 or 3,
- u and v: are independently of each other 0, 1 or 2,
- w: is 0 or 1,
- x and y: are independently of each other 0 or identical or different integers from 1 to 12,
- z: is 0 or 1, with z being 0 if the adjacent x or y is 0,
and wherein the benzene and napthalene rings can additionally be substituted with one or more identical or different groups L.

In addition or alternatively to the compounds of formula I, the LC media and the polymerisable materials according to the present invention may comprise one or more polymerisable or unpolymerisable chiral compounds.

Suitable unpolymerisable chiral compounds are for example standard chiral dopants like R- or S-811, R- or S-1011, R- or S-2011, R- or S-3011, R- or S-4011, R- or S-5011, or CB 15 (all available from Merck KGaA, Darmstadt, Germany), sorbitols as described in WO 98/00428, hydrobenzoins as described in GB 2,328,207, chiral binaphthols as described in WO 02/94805, chiral binaphthol acetals as described in WO 02/34739, chiral TADDOLs as described in WO 02/06265, or chiral compounds having fluorinated linkage groups as described in WO 02/06196 or WO 02/06195. Suitable polymerisable chiral compounds are for example those listed above, or the polymerisable chiral material Paliocolor® LC756 (from BASF AG, Ludwigshafen, Germany).

In addition to the applications mentioned above, the compounds of formula I can also be used in LC mixtures for other LCDs exhibiting a twisted structure like, for example, twisted or supertwisted nematic (TN, STN) displays with multiplex or active matrix addressing, or in cholesteric displays like surface stabilized or polymer stabilized cholesteric texture displays (SSCT, PSCT) as described in WO 92/19695, WO 93/23496, US 5,453,863 or US 5,493,430, for LCDs with variable pitch, like multi-domain LCDs as described in WO 98/57223, or multicolour cholesteric displays as described in US 5,668,614. They can also be used in flexoelectric displays as described for example in GB 2 356 629.

The inventive compounds of formula I are also suitable for use in thermochromic or photochromic LC media, which change their colour upon temperature change or photoirradiation, respectively.

Another preferred use of the compounds of formula I is the preparation of polymerisable LC mixtures, anisotropic polymer gels and anisotropic polymer films. If the compounds of formula I are used in a mixture comprising chiral compounds, or if the compounds of formula I themselves are chiral, polymer films can be prepared that exhibit a helically twisted molecular structure with uniform planar orientation, i.e. wherein the helical axis is oriented perpendicular to the plane of the film, like oriented cholesteric films. Anisotropic polymer gels and displays comprising them are disclosed for example in DE 195 04 224 and GB 2 279 659. Oriented cholesteric polymer films can be used for example as broadband reflective polarisers, colour filters, security markings, or for the preparation of LC pigments.

The general preparation of polymer LC films according to this invention is known to the ordinary expert and described in the literature. Typically a polymerisable LC material is coated or otherwise applied onto a substrate where it aligns into uniform orientation, and polymerised in situ in its LC phase at a selected temperature for example by exposure to heat or actinic radiation, preferably by photo-polymerisation, very preferably by UV-photopolymerisation, to fix the alignment of the LC molecules. If necessary, uniform alignment can promoted by additional means like shearing or annealing the LC material, surface treatment of the substrate, or adding surfactants to the LC material.

As substrate for example glass or quartz sheets or plastic films can be used. It is also possible to put a second substrate on top of the coated material prior to and/or during and/or after polymerisation. The substrates can be removed after polymerisation or not. When using two substrates in case of curing by actinic radiation, at least one substrate has to be transmissive for the actinic radiation used for the polymerisation. Isotropic or birefringent substrates can be used. In case the substrate is not removed from the polymerised film after polymerisation, preferably isotropic substrates are used.

Suitable and preferred plastic substrates are for example films of polyester such as polyethyleneterephthalate (PET) or polyethylenenaphthalate (PEN), polyvinylalcohol (PVA), polycarbonate (PC) or triacetylcellulose (TAC), very preferably PET or TAC films. As birefringent substrates for example uniaxially stretched plastics film can be used. PET films are commercially available for example from DuPont Teijin Films under the trade name Melinex ®.

The polymerisable material can be applied onto the substrate by conventional coating techniques like spin-coating or blade coating. It can also be applied to the substrate by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

It is also possible to dissolve the polymerisable material in a suitable solvent. This solution is then coated or printed onto the substrate, for example by spin-coating or printing or other known techniques, and the solvent is evaporated off before polymerisation. In many cases it is suitable to heat the mixture in order to facilitate the evaporation of the solvent. As solvents for example standard organic solvents can be used. The solvents can be selected for example from ketones such as acetone, methyl ethyl ketone, methyl propyl ketone or cyclohexanone; acetates such as methyl, ethyl or butyl acetate or methyl acetoacetate; alcohols such as methanol, ethanol or isopropyl alcohol; aromatic solvents such as toluene or xylene; halogenated hydrocarbons such as di- or trichloromethane; glycols or their esters such as PGMEA (propyl glycol monomethyl ether acetate), γ-butyrolactone, and the like. It is also possible to use binary, ternary or higher mixtures of the above solvents.

Initial alignment (e.g. planar alignment) of the polymerisable LC material can be achieved for example by rubbing treatment of the substrate, by shearing the material during or after coating, by annealing the material before polymerisation, by application of an alignment layer, by applying a magnetic or electric field to the coated material, or by the addition of surface-active compounds to the material. Reviews of alignment techniques are given for example by I. Sage in "Thermotropic Liquid Crystals", edited by G. W. Gray, John Wiley & Sons, 1987, pages 75-77; and by T. Uchida and H. Seki in "Liquid Crystals - Applications and Uses Vol. 3", edited by B. Bahadur, World Scientific Publishing, Singapore 1992, pages 1-63. A review of alignment materials and techniques is given by J. Cognard, Mol. Cryst. Liq. Cryst. 78, Supplement 1 (1981), pages 1-77.

Especially preferred is a polymerisable material comprising one or more surfactants that promote a specific surface alignment of the LC molecules. Suitable surfactants are described for example in J. Cognard, Mol.Cryst.Liq.Cryst. 78, Supplement 1, 1-77 (1981). Preferred aligning agents for planar alignment are for example nonionic surfactants, preferably fluorocarbon surfactants such as the commercially available Fluorad FC-171® (from 3M Co.) or Zonyl FSN ® (from DuPont), multiblock surfactants as described in GB 2 383 040 or polymerisable surfactants as described in EP 1 256 617.

It is also possible to apply an alignment layer onto the substrate and provide the polymerisable material onto this alignment layer. Suitable alignment layers are known in the art, like for example rubbed polyimide or alignment layers prepared by photoalignment as described in US 5,602,661, US 5,389,698 or US 6,717,644.

It is also possible to induce or improve alignment by annealing the polymerisable LC material at elevated temperature, preferably at its polymerisation temperature, prior to polymerisation.

Polymerisation is achieved for example by exposing the polymerisable material to heat or actinic radiation. Actinic radiation means irradiation with light, like UV light, IR light or visible light, irradiation with X-rays or gamma rays or irradiation with high energy particles, such as ions or electrons. Preferably polymerisation is carried out by UV irradiation. As a source for actinic radiation for example a single UV lamp or a set of UV lamps can be used. When using a high lamp power the curing time can be reduced. Another possible source for actinic radiation is a laser, like for example a UV, IR or visible laser.

Polymerisation is preferably carried out in the presence of an initiator absorbing at the wavelength of the actinic radiation. For example, when polymerising by means of UV light, a photoinitiator can be used that decomposes under UV irradiation to produce free radicals or ions that start the polymerisation reaction. For polymerising acrylate or methacrylate groups preferably a radical photoinitiator is used. For polymerising vinyl, epoxide or oxetane groups preferably a cationic photoinitiator is used. It is also possible to use a thermal polymerisation initiator that decomposes when heated to produce free radicals or ions that start the polymerisation. Typical radical photoinitiators are for example the commercially available Irgacure® or Darocure® (Ciba Geigy AG, Basel, Switzerland). A typical cationic photoinitiator is for example UVI 6974 (Union Carbide).

The polymerisable material may also comprise one or more stabilizers or inhibitors to prevent undesired spontaneous polymerisation, like for example the commercially available Irganox® (Ciba Geigy AG, Basel, Switzerland).

The curing time depends, inter alia, on the reactivity of the polymerisable material, the thickness of the coated layer, the type of polymerisation initiator and the power of the UV lamp. The curing time is preferably ≤ 5 minutes, very preferably ≤ 3 minutes, most preferably ≤ 1 minute. For mass production short curing times of ≤ 30 seconds are preferred.

Preferably polymerisation is carried out in an inert gas atmosphere like nitrogen or argon.

The polymerisable material may also comprise one or more dyes having an absorption maximum adjusted to the wavelength of the radiation used for polymerisation, in particular UV dyes like e.g. 4,4"-azoxy anisole or Tinuvin ® dyes (from Ciba AG, Basel, Switzerland).

In another preferred embodiment the polymerisable material comprises one or more monoreactive polymerisable non-mesogenic compounds, preferably in an amount of 0 to 50 %, very preferably 0 to 20 %. Typical examples are alkylacrylates or alkylmethacrylates.

In another preferred embodiment the polymerisable material comprises one or more di- or multireactive polymerisable non-mesogenic compounds, preferably in an amount of 0 to 50 %, very preferably 0 to 20 %, alternatively or in addition to the di- or multireactive polymerisable mesogenic compounds. Typical examples of direactive non-mesogenic compounds are alkyldiacrylates or alkyldimethacrylates with alkyl groups of 1 to 20 C atoms. Typical examples of multireactive non-mesogenic compounds are trimethylpropanetrimethacrylate or pentaerythritoltetraacrylate.

It is also possible to add one or more chain transfer agents to the polymerisable material in order to modify the physical properties of the polymer film. Especially preferred are thiol compounds, for example monofunctional thiols like dodecane thiol or multifunctional thiols like trimethylpropane tri(3-mercaptopropionate). Very preferred are mesogenic or LC thiols as disclosed for example in WO 96/12209, WO 96/25470 or US 6,420,001. By using chain transfer agents the length of the free polymer chains and/or the length of the polymer chains between two crosslinks in the polymer film can be controlled. When the amount of the chain transfer agent is increased, the polymer chain length in the polymer film decreases.

The polymerisable material may also comprise a polymeric binder or one or more monomers capable of forming a polymeric binder, and/or one or more dispersion auxiliaries. Suitable binders and dispersion auxiliaries are disclosed for example in WO 96/02597. Preferably, however, the polymerisable material does not contain a binder or dispersion auxiliary.

The polymerisable material can additionally comprise one or more additives like for example catalysts, sensitizers, stabilizers, inhibitors, chain-transfer agents, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes, pigments or nanoparticles.

The thickness of a polymer film according to the present invention is preferably from 0.3 to 5 microns, very preferably from 0.5 to 3 microns, most preferably from 0.7 to 1.5 microns. For use as alignment layer, thin films with a thickness of 0.05 to 1, preferably 0.1 to 0.4 microns are preferred.

The polymer film of the present invention can be used as retardation or compensation film for example in LCDs to improve the contrast and brightness at large viewing angles and reduce the chromaticity. It can be used outside the switchable LC cell of the LCD or between the substrates, usually glass substrates, forming the switchable LC cell and containing the switchable LC medium (incell application).

The polymer film of the present invention can also be used as alignment layer for LC materials. For example, it can be used in an LCD to induce or improve alignment of the switchable LC medium, or to align a subsequent layer of polymerisable LC material coated thereon. In this way, stacks of polymerised LC films can be prepared.

In particular, the compounds, mixtures, polymers and polymer films according to the present invention can be used in reflective polarisers as disclosed in GB 2 315 072 or WO 97/35219, negative C plate retarders as disclosed in WO 01/20394 or WO 2004/013666, biaxial negative C plate retarders as disclosed in WO 2003/054111, alignment layers as disclosed in EP 1 376 163, birefringent markings or images for decorative or security use as disclosed in GB 2 315 760, WO 02/85642, EP 1 295 929 or EP 1 381 022.

The polymer film of the present invention can be used in conventional LC displays, for example displays with vertical alignment like the DAP (deformation of aligned phases), ECB (electrically controlled birefringence), CSH (colour super homeotropic), VA (vertically aligned), VAN or VAC (vertically aligned nematic or cholesteric), MVA (multi-domain vertically aligned) or PVA (patterned vertically aligned) mode; displays with bend or hybrid alignment like the OCB (optically compensated bend cell or optically compensated birefringence), R-OCB (reflective OCB), HAN (hybrid aligned nematic) or pi-cell (π-cell) mode; displays with twisted alignment like the TN (twisted nematic), HTN (highly twisted nematic), STN (super twisted nematic), AMD-TN (active matrix driven TN) mode; displays of the IPS (in plane switching) mode, or displays with switching in an optically isotropic phase.

The following examples are intended to explain the invention without restricting it. The methods, structures and properties described hereinafter can also be applied or transferred to materials that are claimed in this invention but not explicitly described in the foregoing specification or in the examples.

Above and below, percentages are per cent by weight. All temperatures are given in degrees Celsius. m.p. denotes melting point, cl.p. denotes clearing point, T_{g} denotes glass transition temperature. Furthermore, C = crystalline state, N = nematic phase, S = smectic phase and I = isotropic phase. The data between these symbols represent the transition temperatures. Δn denotes the optical anisotropy (Δn = nₑ - nₒ, where nₒ denotes the refractive index parallel to the longitudinal molecular axes and nₑ denotes the refractive index perpendicluar thereto), measured at 589 nm and 20°C. V₁₀ and V₉₀ denote the voltage for 10% and 90% transmission, respectively (viewing angle perpendicular to the plate surface). τₒₙ denotes the switch-on time and τ_{off} the switch-off time at an operating voltage corresponding to 2 times the value of V₁₀. Δε denotes the dielectric anisotropy (Δε = ε∥ - ε⊥, where ε∥ denotes the dielectric constant parallel to the longitudinal molecular axes and ε⊥ denotes the dielectric constant perpendicular thereto). The optical and electrooptical data are measured at 20°C, unless expressly stated otherwise.

Unless stated otherwise, the precentages of components of a polymerisable mixture as given above and below refer to the total amount of solids in the mixture polymerisable mixture, i.e. not including solvents.

### RM Examples

### Example 1

Compound (1) is prepared according to reaction scheme 1.

4-Propyl-bicyclo[2.2.2]octane-1-carboxylic acid 4-acryloyloxy-butyl ester (1):

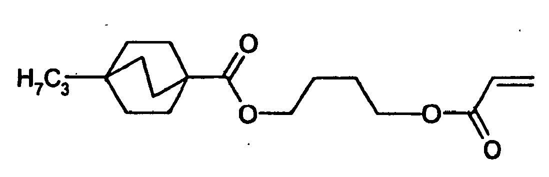

4-Propyl-bicyclo[2.2.2]octane-1-carboxylic acid (10.0 g, 50.1 mmol), 4-hydroxybutylacrylate (7.3 g, 50.1 mmol) and para-toluenesulphonic acid (3.2 g) are stirred under reflux in toluene (40 ml) in a round bottomed flask equipped with Dean-Stark apparatus. After 1 hour the solution is washed with aqueous sodium carbonate, water and then dried over sodium sulphate. The product is purified by preparative HPLC using acetonitrile/water as eluant to afford upon evaporation of the appropriate fractions a colourless oil (9.8 g, 60%). ¹H NMR gave expected signals.

Physical data of (1):

| Δε | ε_{┴} | Δn | nₑ | Transitions |
|---|---|---|---|---|
| -4.8 | 6.3 | -0.0332 | 1.4465 | T_{g} <-70 |

### Example 2

Compound (2) is prepared according to reaction scheme 1.

4-Propyl-bicyclo[2.2.2]octane-1-carboxylic acid 4-(2-methyl-allanoyloxy)-butyl ester (2):

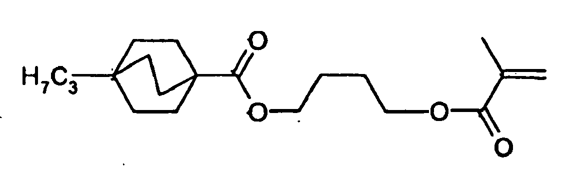

### Step 1

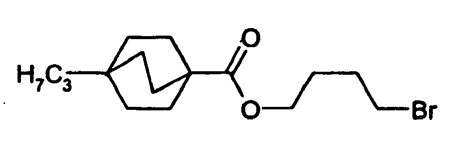

4-Propyl-bicyclo[2.2.2]octane-1-carboxylic acid (10.0 g, 50.1 mmol), 4-bromobutan-1-ol (7.8 g, 50.1 mmol) and para-toluene sulphonic acid (2.0 g) are stirred under reflux overnight in a round bottomed flask equipped with Dean-Stark apparatus. After 20 hours, the mixture is allowed to cool to room temperature, the solution is washed with sodium bicarbonate solution, water and dried over sodium sulphate. The solution is evaporated to dryness to afford a pale yellow oil (16.0 g, 95%). ¹H NMR gave expected signals.

### Step 2

4-Propyl-bicyclo[2.2.2]octane-1-carboxylic acid 4-bromobutyl ester (5.0 g, 15.1 mmol), methacrylic acid (3.9 g, 45.0 mmol) and potassium carbonate (7.6 g, 55.0 mmol) are stirred under reflux in DMSO (200 ml). After 30 minutes, the mixture is cooled, poured into water (400 ml), the crude product is extracted into diethyl ether. The ethereal layer is removed and washed with water, then dried over sodium sulphate. The product is purified by preparative HPLC using water/acetonitrile as eluant to give upon evaporation of the appropriate fractions as colourless oil (1.8 g, 35%). ¹H NMR gave expected signals.

Physical data of (2):

| Δε | ε_{⊥} | Δn | nₑ | Transitions |
|---|---|---|---|---|
| -5.1 | 5.9 | -0.0408 | 1.4393 | K 2.4 I |

### Example 3

Compound (3) is prepared according to reaction scheme 1.

4-Propyl-bicyclo[2.2.2]octane-1-carboxylic acid 3-(2-methyl-allanoyloxy)-2,2-dimethylpropyl ester (3):

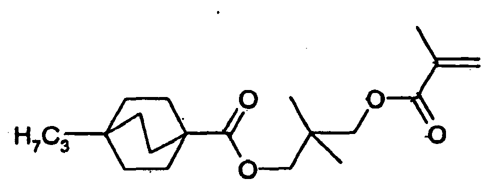

### Step 1

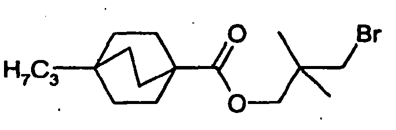

4-Propyl-bicyclo[2.2.2]octane-1-carboxylic acid (7.9 g, 40.0 mmol), 3-bromo-2,2-dimethylpropanol (5.0 g, 40.0 mmol) and *para-*toluenesulphonic acid (0.8 g) are stirred under reflux in toluene for 20 hours. The mixture is allowed to cool to room temperature, washed with water and dried over sodium sulphate. The solution is evaporated to dryness and purified by column chromatography using petrol/DCM as eluant. Evaporation of the appropriate fractions gives a colourless liquid (8.4 g, 61%). ¹H NMR gave expected signals.

### Step 2

4-Propyl-bicyclo[2.2.2]octane-1-carboxylic acid 3-bromo-2,2-dimethylpropyl ester (5.0 g, 14.5 mmol), methacrylic acid (3.7 g, 43.4 mmol) and potassium carbonate (7.6 g, 55 mmol) are stirred over weekend at 105°C. The mixture is allowed to cool to room temperature. A precipitate is removed by filtration. The filtrate is poured into water and extracted with ether. The ethereal layer is washed with water, dried over sodium sulphate and concentrated under vacuum. The crude product is purified by flash column chromatography using DCM as eluant to afford upon evaporation of the appropriate fractions a colourless oil (4.0 g, 79%). ¹H NMR gave expected signals.

Physical data of (3):

| Δε | ε_{⊥} | Δn | nₑ | Transitions |
|---|---|---|---|---|
| -7.0 | 6.2 | -0.0812 | 1.4054 | Tg <-70 |

### Example 4

Compound (4) is prepared according to reaction scheme 2.

2-Methyl-acrylic acid 3-[2,6-difluoro-4-(4-hexyl-bicyclo[2.2.2]oct-1-yl)-phenoxy]-propyl ester (4):

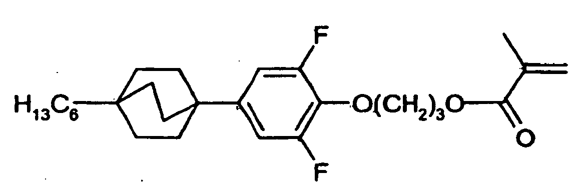

### Step 1

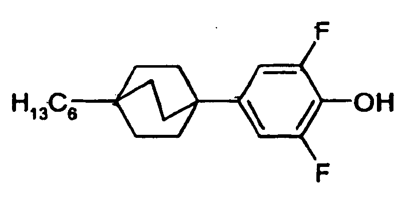

4-Hexyl-bicyclo[2.2.2]octan-1-ol (10.0 g, 50 mmol), 2,6-difluorophenol (6.5 g, 50 mmol) are added slowly to sulphuric acid (64 ml) at 25°C. An ice bath is used to maintain the temperature at 25°C, since an exothermic reaction occurrs. After 60 minutes, the reaction mixture is poured into ice, and the resulting mixture is extracted with diethyl ether. The ether extracts are washed with water, dried over sodium sulphate and concentrated to dryness to leave a waxy solid (13.0 g, 81%). ¹H NMR showed expected signals.

### Step 2

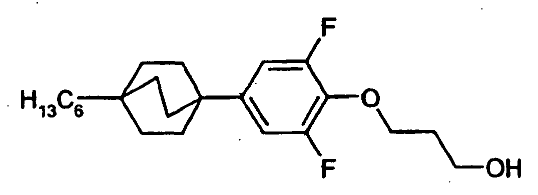

3-[2,6-difluoro-4-(4-hexyl-bicyclo[2.2.2]oct-1-yl)-phenol (6.8 g, 21.0 mmol), 3-bromopropan-1-ol (3.5 g, 25.0 mmol) and potassium carbonate (4.1 g, 30.0 mmol) are stirred under reflux in butanone overnight. A precipitate is removed by filtration and washed with ethyl acetate. The washings are combined and washed with water. The organic is removed, washed with water, dried over sodium sulphate and evaporated to dryness. The residue is purified by filtering through a bed of silica using DCM as eluant to afford a colourless oil (7.4 g, 93%). ¹H NMR gave expected signals.

### Step 3

3-[2,6-Difluoro-4-(4-hexyl-bicyclo[2.2.2]oct-1-yl)-phenoxy]-propanol (6.0 g, 15.8 mmol), triethylamine (22.3 ml, 16.0 mmol) and methacryloyl chloride (2.2 g, 21.5 mmol) are stirred under reflux in DCM for 5 hours. The mixture is allowed to cool to room temperature, washed with water and dried over sodium sulphate. The product is purified by preparative HPLC using acetonitrile/water as eluant to give upon evaporation of the appropriate fractions a colourless oil (0.6 g, 8%). ¹H NMR gave expected signals.

### Physical data of (4):

| Δε | ε_{⊥} | Δn | nₑ | Transitions |
|---|---|---|---|---|
| 1.1 | 6.0 | -0.0343 | 1.5249 | Tg <-40 |

### Examples 5-34

The following compounds are obtained in analogy to the methods described in examples 1-4:

| | |
|---|---|
| 5 | 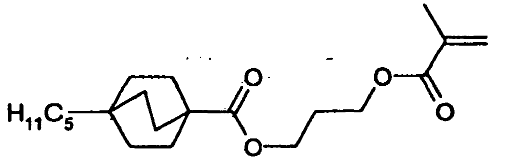 |
| | |
| 6 | 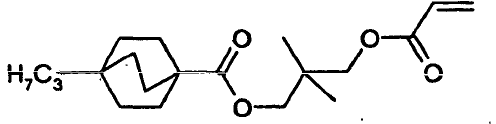 |
| | |
| 7 | 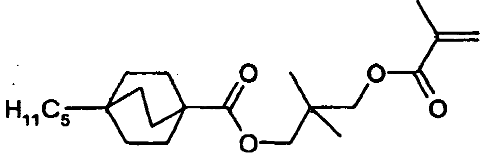 |
| | |
| 8 | 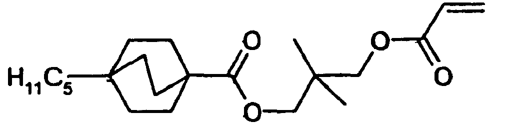 |
| | |
| 9 | 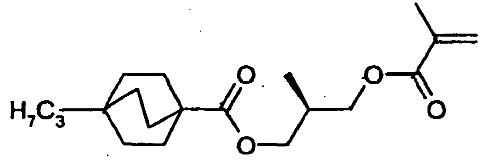 |
| | |
| 10 | 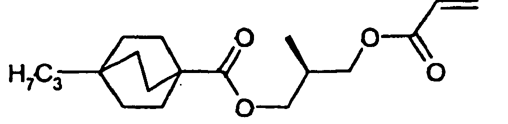 |
| | |
| 11 | 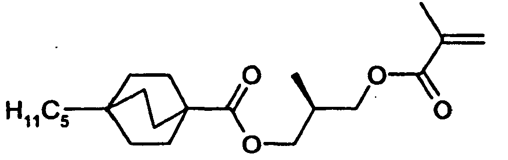 |
| | |
| 12 | 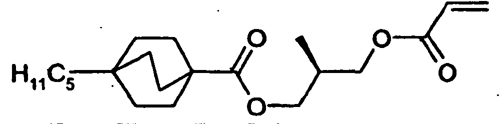 |
| | |
| 13 | 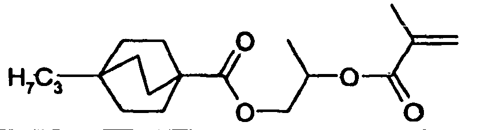 |
| | |
| 14 | 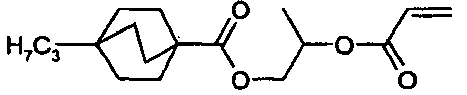 |
| | |
| 15 | 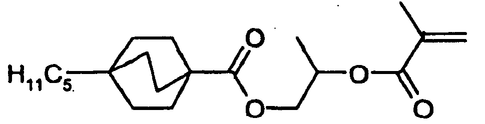 |
| | |
| 16 | 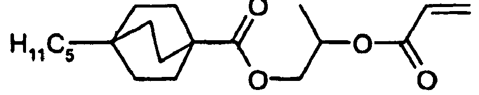 |
| | |
| 17 | 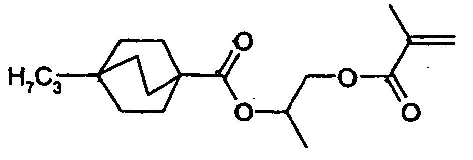 |
| 18 | 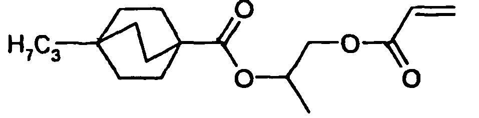 |
| | |
| 19 | 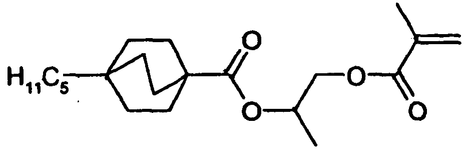 |
| | |
| 20 | 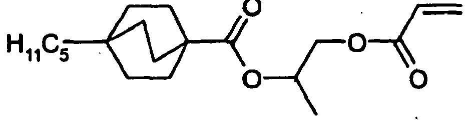 |
| | |
| 21 | 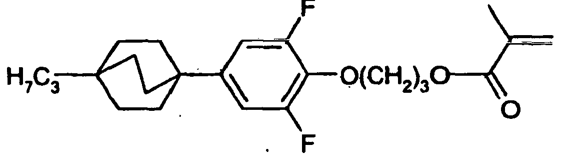 |
| | |
| 22 | 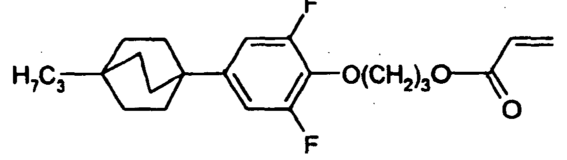 |
| | |
| 23 | 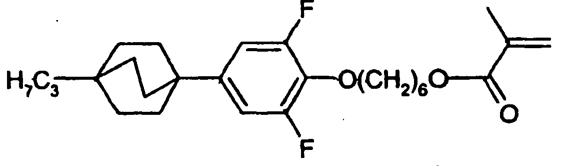 |
| | |
| 24 | 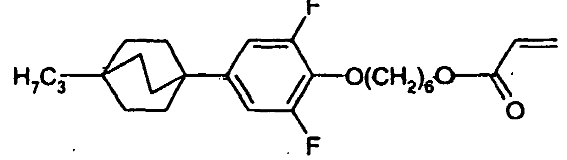 |
| | |
| 25 | 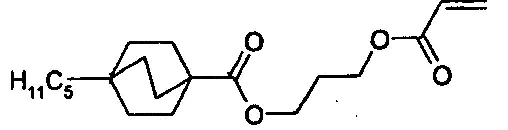 |
| | |
| 26 | 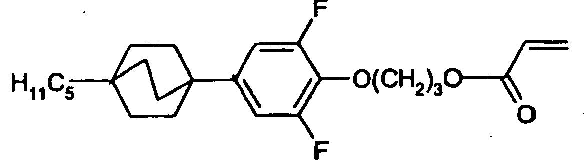 |
| | |
| 27 | 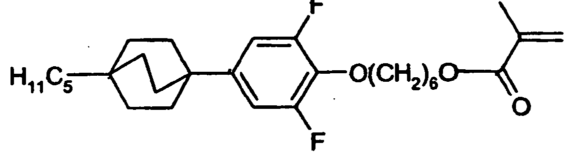 |
| | |
| 28 | 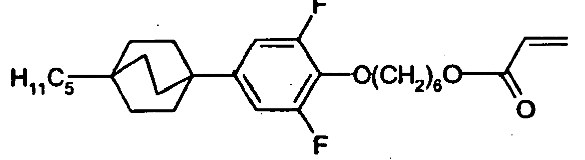 |
| | |
| 29 | 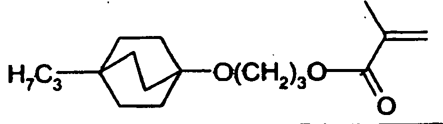 |
| | |
| 30 | 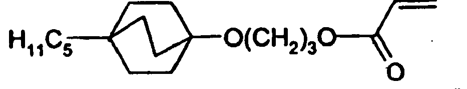 |
| | |
| 31 | 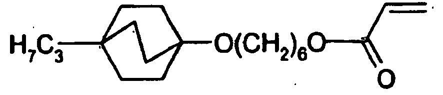 |
| | |
| 32 | 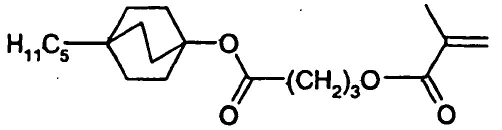 |
| | |
| 33 | 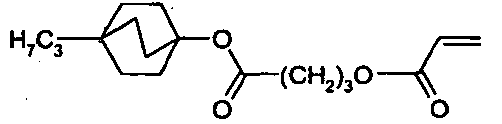 |
| | |
| 34 | 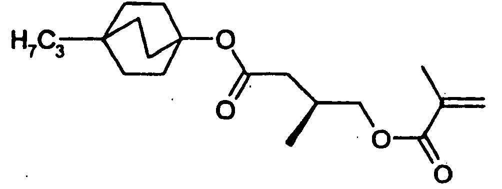 |

The VHR of compound (9) or example 9 is measured in the commercially available host mixture MDA-03-1767 at 20°C. The VHR before UV-load is 99,7 %, the VHR after UV-load 98.6 %.

### Use Examples

The physical data of the compositions both of the polymer precursors and of the mesogenic host mixtures illustrate which properties can be achieved in which ranges. The combination of the various properties which can be preferably achieved is thus well defined.

In the following set of examples the influence of monoreactive bicyclooctyl-containing monomers is investigated for mixtures containing a combination of monoreactive and direactive mesogens.

The following acronyms are used to describe the components of the LC host mixture:

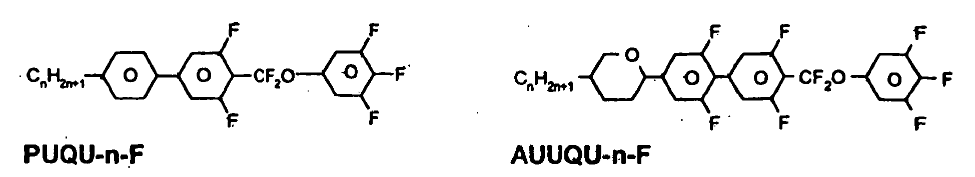

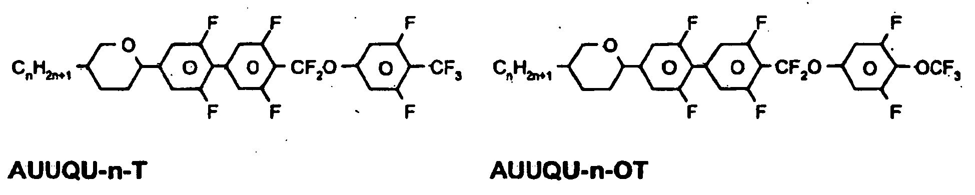

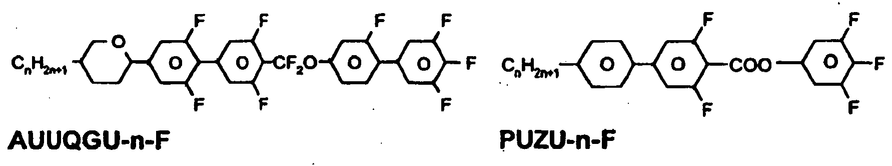

Preferred host mixtures according to this invention comprise one or more pyrane compounds, preferably selected from the acronyms AUUQU-n-F, AUUQU-n-T, AUUQU-n-OT and AUUQGU-n-F as shown above, one or more compounds comprising a 2,6-difluoro benzoic acid 3,5-trifluorophenyl ester group, preferably selected from the acronym PUZU-n-F as shown above, and one or more compounds comprising a 5-[(2,6-difluorophenyl)-difluoromethoxy]-1,3-trifluoro benzene group, preferably selected from the acronym PUQU-n-F as shown above.

A chiral dopant with a high value of the helical twisting power (HTP), R-5011, commercially available from Merck KGaA, is added to a quantity of the polar host mixture A0 having the composition given in Table 1 below. The HTP of the chiral dopant R-5011 is measured as 160 micron⁻¹ in the host mixture A0. This dopant is added so that it is comprised at 2.5% by mass of the mixture after all other components have been added. A given quantity of the monoreactive bicyclooctyl-containing reactive mesogens as specified below and of the direactive reactive mesogen as specified below are added to the host mixture. A small amount of the photoinitiator 2,2-dimethoxy-1,2-diphenyl-ethanone (commercially known as Irgacure-651, here also shortened to IRG-651) is also added to the mixture. When all of the components have been added, the mixture is made homogeneous by stirring in the isotropic phase.

**Table 1: Composition and Properties of Host Mixture A0**

| Compound Abbreviation | Concentration / mass-% | Properties |
|---|---|---|
| PUQU-2-F | 8 | T(N, I): 51.7°C |
| PUQU-3-F | 10 | Δn (20°C, 589 nm): 0.1400 |
| AUUQU-2-F | 9.02 | |
| AUUQU-3-F | 10.66 | |
| AUUQU-4-F | 4.92 | |
| AUUQU-5-F | 4.51 | |
| AUUQU-7-F | 4.92 | |
| AUUQU-3-T | 9.02 | |
| AUUQU-3-OT | 10.66 | |
| AUUQGU-3-F | 5.74 | |
| PUZU-2-F | 4.51 | |
| PUZU-3-F | 9.02 | |
| PUZU-5-F | 9.02 | |
| Σ | 100 | |

### Polymerisation Experiments

The types of cells used for phase identification are typically 10 micron thick cells without any alignment layers or electrodes. The cells have a size of approximately 2.0 cm x 2.5 cm. They are filled by capillary action in an oven, typically at a temperature of 75°C. Before polymerisation, the behaviours of the mixtures are characterised by polarising microscopy and their phase transition temperatures are measured on heating at 1°C/min. The experimental set-up used for this consists of an Olympus BX51 polarising microscope equipped with a Linkam temperature programmer and hot-stage.

Polymerisation experiments are carried out using an EFOS UV lamp fitted with a 365nm narrow band filter giving a power of 1.5 mW/cm². Initially, the sample is maintained at a temperature in the Blue Phase (BP), which is identified from the polarising microscopy as being Blue Phase I (BPI). After each increment of 5s of UV irradiation, the texture of the cell is checked using the polarising microscope to assess any changes. If the sample becomes darker, this is indicative that a phase transitionto isotropic state is about to occur, the temperature for the next step of UV irradiation is changed accordingly. Total exposure times are typically 180s at which point, the final texture is stabilised.

After the polymerisation process has been completed, the temperature range in which the blue phase is stable is measured. Subsequently, a further test cell is prepared and the electro-optic characteristics of the mixture evaluated as described below.

### Electrooptic Characterisation

The test cells used for the electro-optic measurements have interdigitated electrodes on one surface of the cell. The electrode width, inter-electrode distance and cell gap are typically 10microns and the area of the cell covered by electrodes is approximately 0.4cm². The cell surfaces have no alignment layer or rubbing pretreatment. Test cells are filled with the mixture of choice by capillary action at elevated temperature and then polymerised in Blue Phase I as described above.

Electro-optic measurements are made using a DMS301 (Autronic-Melchers) with the cell placed between crossed polarisers, and orientated with respect to the polarisers in such a way that the long axis of the electrodes makes an angle of 45° with the polariser transmission directions. The plane of the cell lies perpendicular to the direction along which the transmission of the cell is measured. This configuration gives an essentially dark state when no driving voltage is applied across the electrodes. The electro-optic investigation is carried out in two parts. In the first part, the driving voltages of the cell are measured and, in the second, the cell switching speeds are measured. The driving voltages applied across the cell electrodes are square waves with alternating positive and negative polarity, with a frequency of 100Hz and variable amplitude as described below.

For the purposes of describing the switching behaviour, the following definitions apply. The cell transmission when no driving voltage is applied is defined as 0% transmission. In the first part of the measurement, the cell transmission is measured as the driving voltage is increased progressively from zero: at a certain voltage a maximum in the transmitted intensity is measured. The cell transmission is defined as being 100% at this applied voltage and this characteristic voltage is defined as V₁₀₀. The characteristic voltage V₁₀ is defined as the voltage required to increase the transmission from 0 to 10% of that measured when V₁₀₀ is applied. In the second part of the switching measurement, the switching speeds are measured. The applied voltage is increased instantaneously from zero to V₁₀₀ to measure the 'switch on' electro-optic response of the cell. The switching time τₒₙ is defined as being the time taken for the cell transmission to switch from 0 to 90% of the final transmitted intensity. Subsequently, the applied voltage is decreased instantaneously from V₁₀₀ to zero to measure the 'switch off response of the cell, The switching time τ_{off} is defined as being the time taken for the cell transmission to drop 90% of the way from its value when V₁₀₀ is applied to that when no voltage is applied. This characterisation method is repeated with the cell maintained at a range of different temperatures.

At low temperatures, mixtures show high switching voltage. As the temperature is raised the operating voltage falls to a minimum and then increases with increasing temperature, this increase is steady at first and then very rapid with further increases in temperature when the mixture becomes isotropic. Two transition temperatures T₁ and T₂ are identified which mark the lowest and highest temperatures at which the system can be used electro-optically in the blue phase. T₁ is obtained from the plot of V₁₀₀ against temperature by the intersection of a tangential line drawn through the points in which high operating voltages are obtained at low temperatures with a second tangential line drawn through the points in which the operating voltage increases steadily through the blue phase temperature range. T₂ is obtained from the same plot by the intersection of a similar tangential line drawn through the points in which the voltage increases steadily through the blue phase temperature range with a third line tangential drawn through the points in which high operating voltages are obtained when the system is in the isotropic phase. The temperature range over which the mixture can be used electro-optically in the blue phase, termed the flat range, is given by (T₂ - T₁).

### Mixture Examples

Monoreactive compounds (1) to (5) are investigated together with the direactive mesogenic component RM220 (commercially available from Merck KgaA) in a mixture with the compositions (in mass-%) given in the table 2 below. The phase behaviour of these systems before and after polymerisation is given in Table 3.

### Structure of RM220 :

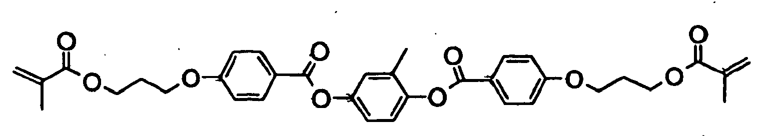

**Table 2: Compositions of the mixtures investigated**

| | | Mixture Compositions in mass % | | | | |
|---|---|---|---|---|---|---|
| Example Number | Test Compound | A0 | R-5011 | RM220 | Test cpd. | IRG-651 |
| A1 | 1 | 87.9 | 2.5 | 5 | 4.4 | 0.2 |
| A2 | 2 | 87.6 | 2.5 | 5 | 4.7 | 0.2 |
| A3 | 3 | 87.5 | 2.5 | 5 | 4.8 | 0.2 |
| A4 | 4 | 86.3 | 2.5 | 5 | 6 | 0.2 |
| A5 | 5 | 87.9 | 2.5 | 5 | 4.4 | 0.2 |

**Table 3: Phase behaviour of examples A1 to A5**

| Example Number | Test Cpd. | Cure Temp. (°C) | Phase behaviour before cure (Temp. in °C)² | Blue Phase stability after cure (Temp. in °C)¹ |
|---|---|---|---|---|
| A1 | 1 | 23.2 | N* 23 BPI 24.4 BPII/III 27.3 I | -20 to 36 |
| A2 | 2 | 23 | N* 22.0 BPI 22.5 BPII/III 26 I | -20 to 42 |
| A3 | 3 | 19.2 | N* 19.8 BPI 23 BPIII 23.5I | -20 to 43.3 |
| A4 | 4 | 31 | N* 31.4 BPI 31.9 BPII 32.4 BPIII 34.4 I | -20 to 41 |
| A5 | 5 | 21.8 | N* 20 BPI 21.5 BPII 22.3 BPIII 22.9 I | -20 to 42.5 |

| | | | | |
|---|---|---|---|---|
| Remarks: 1: Phases: N* = chiral nematic, BPI = Blue Phase I, BPII = Blue Phase II, BPIII = Blue Phase III, I = Isotropic 2: The stability of Blue Phase I in cured samples is typically only checked for temperatures as low as -20°C | | | | |

### Example A1

4.4% of compound (1), 5% of the difunctional RM220 and 2.5% of the chiral agent R-5011 together with 0.2% of the photoinitiator Irgacure-651 are dissolved in achiral LC mixture A0. The resulting mixture is filled into a 10 micron thick cell without any electrodes or alignment layers. This is done by capillary action in an oven at approximately 75°C. The cell is then examined for LC phases and to determine the blue phase temperature ranges. The cell is placed on the Linkam-controlled hot stage mounted on a microscope stage and viewed through crossed polarisers. The phase transition temperatures and polymerisation conditions are determined as described above.

The mixture is then filled into an electro-optical test cell, with interdigitated electrodes on one substrate side, in an oven at approximately 75°C. The electrode width is 10 microns, the distance between adjacent electrodes 10 microns and the cell gap 10 microns.

Polymerisation is carried out using an EFOS UV lamp fitted with a 365nm narrow band filter operated at a power of 1.5mW/cm². The sample is maintained at a temperature in the Blue Phase regime, 23.2°C, and exposed to 180s of radiation at 365nm. The cell is then checked under the polarising microscope to assess any changes. As no phase transition has occurred the test cell is evaluated electro-optically between crossed polarisers.

As shown in Table 4 below, at low temperatures the filled cell shows high switching voltage and slow response time. As the temperature is raised the operating voltage falls to a minimum at -1.7°C and then increases steadily to the value measured at +35.2°C, after which it increases very rapidly with further increases in temperature when the mixture becomes isotropic. Throughout the temperature range between -13.7°C, and 35.2°C, the switching off time falls from 180ms to 1.1ms. The characteristic temperatures T₁ and T₂ in this example are -11.9°C and 35.2°C, giving a flat range for this mixture of 47.1 °C. The temperature range over which both of the response times τₒₙ and τ_{off} are below 5ms and at the same time the characteristic voltages are still sufficiently low, for this example extends from 18.2°C to 35.2°C.

**Table 4: Temperature dependence of the switching characteristics for example A1**

| T(°C) | V₁₀(volts) | V₁₀₀ (volts) | τₒₙ (ms) | τ_{off} (ms) |
|---|---|---|---|---|
| -18.2 | 32 | 106 | 150 | 450 |
| -13.7 | 16 | 49 | 60 | 180 |
| -6.6 | 11 | 28 | 25 | 60 |
| -1.7 | 11 | 27 | 13 | 30 |
| 3.5 | 11 | 29 | 6 | 20 |
| 8.2 | 11 | 31 | 3 | 14 |
| 18.2 | 12 | 35 | 1.5 | 5 |
| 27.9 | 14 | 41 | 0.6 | 2 |
| 35.2 | 18 | 48 | 1 | 1.1 |
| 37.9 | 35 | 100 | 0.15 | 0.45 |
| 39 | 60 | 127 | 0.3 | 0.16 |

The characteristic temperatures, voltages and switching times for the mixture examples A1 to A4 are measured in a similar way and are shown in Table 5 below.

**Table 5: Characteristic properties**

| Example Number | A1 | A2 | A3 | A4 |
|---|---|---|---|---|
| T₁ (°C) | -11.9 | -7 | -9 | -3.0 |
| V₁₀₀ (volts) | 49 | 37 | 50 | 46 |
| τₒₙ (ms) | 60 | 9 | 7 | 3.5 |
| _{τoff} (ms) | 180 | 30 | 30 | 16 |
| T₂ (°C) | 35.2 | 38 | 40.8 | 36 |
| V₁₀₀ (volts) | 48 | 57 | 72 | 67 |
| τₒₙ (ms) | 1 | 0.4 | 0.13 | 0.2 |
| _{τoff} (ms) | 1.1 | 0.8 | 0.55 | 0.75 |
| Flat range (°C) | 47.1 | 45 | 43.8 | 39 |

The results show that the bicyclooctyl RMs of formula I are useful for polymer stabilisation of the blue phase of an LC host mixture.

## Claims

1. Compounds of formula I
R¹-A-(B)_{b}-R² I
wherein
R¹ and R² are independently of each other selected from straight-chain or branched alkyl or alkoxy with 1 to 12 C-atoms that is optionally fluorinated, or denote P-Sp-, with at least one of R¹ and R² being P-Sp,
R⁰ and R⁰⁰ independently of each other denote H or alkyl with 1 to 12 C-atoms,
P is a polymerisable group,
Sp is a spacer group or a single bond,
A is 1,4-bicyclo[2.2.2]octylene,
B is 1,4-cyclohexylene, 1,4-phenylene that is substituted with one or more groups L, or 1,4- bicyclo[2.2.2]octylene,
L is selected from F, Cl, Br, I, -CN, -NO₂, -NCO, - NCS, -OCN, -SCN, -C(=O)NR⁰R⁰⁰, -C(=O)X, - C(=O)OR⁰, -C(=O)R⁰, -NR⁰R⁰⁰, -OH, -SF₅, optionally substituted silyl, aryl with 1 to 12 C atoms, and straight chain or branched alkyl, alkoxy, alkylcarbonyl, alkoxycarbonyl, alkylcarbonlyoxy or alkoxycarbonyloxy with 1 to 12 C atoms, wherein one or more H atoms are optionally replaced by F or Cl, wherein R⁰ and R⁰⁰ are as defined above and X is halogen,
b is 0 or 1.

2. Compounds according to claim 1, **characterized in that** one of R¹ and R² is P-Sp- and the other is an unpolymerisable group.

3. Compounds according to claim 1 or 2, **characterized in that** B is 1,4-phenylene that is substituted with one or more groups L.

4. Compounds according to one or more of claims 1 to 3, **characterized in that** R¹ and/or R² and/or one or both of the groups Sp are a chiral group.

5. Compounds according to one or more of claims 1 to 4, **characterized in that** they are selected from the following formulae 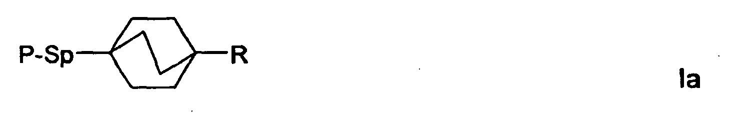 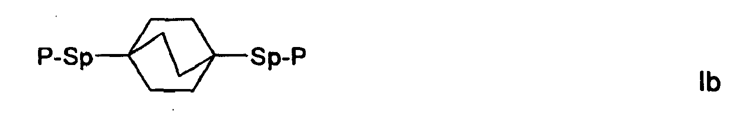 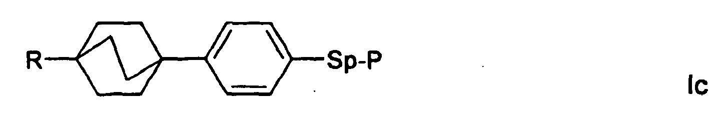 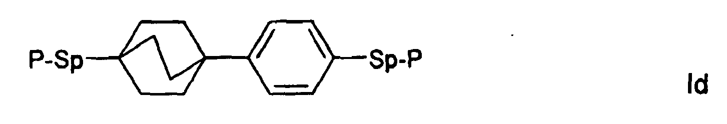 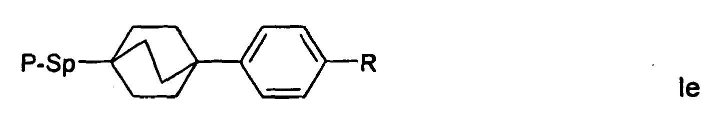 wherein P and Sp are as defined in claim 1, R has one of the meanings of R¹ given in claim 1 that is different from P-Sp-, and the phenyl ring is substituted by one or more groups L as defined in claim 1 or 3.

6. Compounds according to claim 5 **characterized in that** they are selected from the following formulae 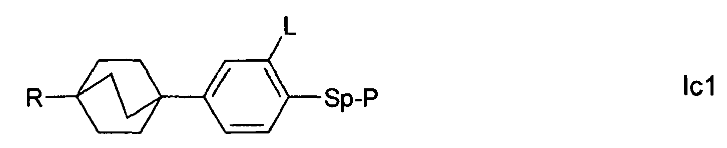 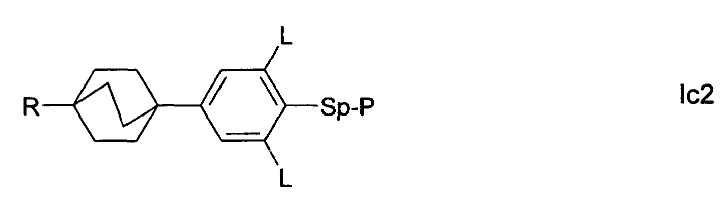 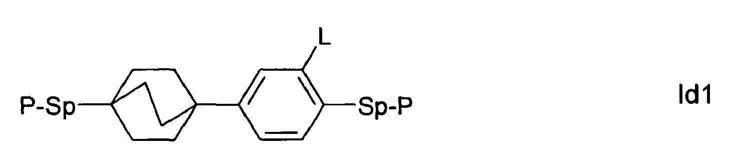 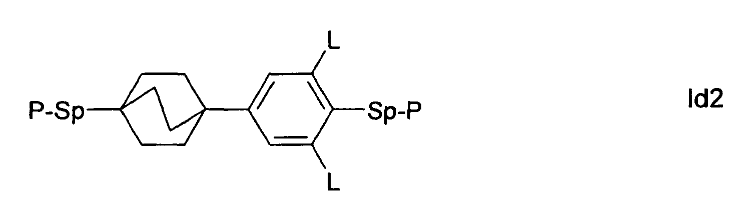 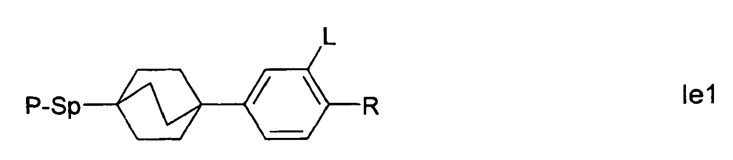 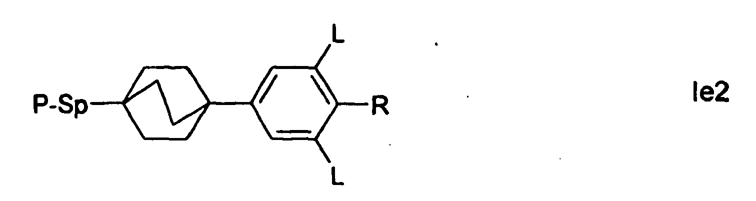 wherein P, Sp and L are as defined in claim 5.

7. Compounds according to claim 5 or 6, **characterized in that** Sp-P is -COO-alkylene-P or -O-alkylene-P, wherein "alkylene" is straight-chain or branched alkylene with 1 to 12 C-atoms, which is optionally fluorinated.

8. Compounds according to one or more of claims 5 to 7, **characterized in that** P is acrylate or methacrylate.

9. LC material comprising one or more compounds according to one or more of claims 1 to 8.

10. LC medium comprising the following components
a) one or more unpolymerisable, mesogenic or liquid crystalline compounds,
b) one or more polymerisable mesogenic or liquid crystalline compounds according to one or more of claims 1 to 8,
c) optionally one or more additional polymerisable, mesogenic or liquid crystalline compounds,
wherein said mixture comprises one or more chiral compounds, which can be compounds of components a, b or c or can form an additional component d.

11. LC medium according to claim 10, **characterized in that** it has a blue phase.

12. LC medium according to claim 11, wherein the temperature range of the blue phase is broadened by in-situ polymerisation of component b, and, if present, component c, at a temperature at which the unpolymerised LC medium exhibits a blue phase.

13. Method of stabilising the blue phase of an LC medium by adding a component b) comprising one or more polymerisable mesogenic or liquid crystalline compounds according to one or more of claims 1 to 8 and optionally a component c) comprising one or more additional polymerisable mesogenic or liquid crystalline compounds to the medium, and polymerising component b, and if present component c, in situ at a temperature at which the unpolymerised LC medium exhibits a blue phase.

14. Electrooptical cell comprising two plane-parallel substrates, at least one of which is transparent to visible light, and at least one of which comprises an electrode layer, and further comprising an LC medium according to one or more of claims 10 to 12.

15. Polymerisable LC material comprising one or more compounds according to one or more of claims 1 to 8 and optionally comprising one or more further compounds that can be polymerisable and/or mesogenic or liquid crystalline.

16. Anisotropic polymer obtainable by polymerising a compound according to one or more of claims 1 to 8 or an LC material according to claim 15 in its oriented state.

17. Use of a compound, material or polymer according to one or more of claims 1 to 16 in electrooptical displays, LCDs, optical films, polarisers, compensators, beam splitters, reflective films, alignment layers, colour filters, holographic elements, hot stamping foils, coloured images, decorative or security markings, LC pigments, adhesives, cosmetics, diagnostics, nonlinear optics, optical information storage, electronic devices, organic semiconductors, field effect transistors (FET), components of integrated circuitry (IC), thin film transistors (TFT), Radio Frequency Identification (RFID) tags, organic light emitting diodes (OLED), electroluminescent displays, lighting devices, photovoltaic devices, sensor devices, electrode materials, photoconductors, electrophotographic recording, lasing materials or devices, or for polymer stabilised blue phases.

18. Method for preparing a compound according to one or more of claims 1 to 8, by
esterification of a 4-substituted bicyclo[2.2.2]octan-1-carboxylic acid or acid derivative with an ω-halogenalkyl alcohol, and reaction of the resulting product with an unsaturated carboxylic acid or acid derivative, or
reaction of 4-substituted bicyclo[2.2.2]octan-1-ol with optionally substituted phenol, optional esterifcation of the resulting product with an ω-halogenalkyl alcohol, and reaction of the resulting product with an unsaturated carboxylic acid or acid derivative.

## Patentansprüche

1. Verbindungen der Formel I
R¹-A-(B)_{b}-R² I
worin
R¹ und R² unabhängig voneinander ausgewählt sind aus geradkettigem oder verzweigten Alkyl oder Alkoxy mit 1 bis 12 C-Atomen, das gegebenenfalls fluo- riert ist, oder P-Sp- bedeuten, wobei mindestens eines von R¹ und R² P-Sp bedeutet,
R⁰ und R⁰⁰ unabhängig voneinander H oder Alkyl mit 1 bis 12 C-Atomen bedeuten,
P eine polymerisierbare Gruppe bedeutet,
Sp eine Spacergruppe oder eine Einfachbindung bedeutet,
A 1,4-Bicyclo[2.2.2]octylen bedeutet,
B 1,4-Cyclohexylen, mit einer oder mehreren Gruppen L substituiertes 1,4-Phenylen oder 1,4- Bicyclo[2.2.2]octylen bedeutet,
L ausgewählt ist aus F, Cl, Br, I, -CN, -NO₂ , -NCO, -NCS, -OCN, -SCN, -C(=O)NR⁰R⁰⁰, -C(=O)X, -C(=O)OR⁰, -C(=O)R⁰, -NR⁰R⁰⁰, -OH, -SF₅, gege- benenfalls substituiertem Silyl, Aryl mit 1 bis 12 C- Atomen und geradkettigem oder verzweigtem Alkyl, Alkoxy, Alkylcarbonyl, Alkoxycarbonyl, Alkyl- carbonlyoxy oder Alkoxycarbonyloxy mit 1 bis 12 C-Atomen, worin ein oder mehrere H-Atome gegebenenfalls durch F oder Cl ersetzt sind, worin R⁰ und R⁰⁰ wie oben definiert sind und X Halogen bedeutet,
b 0 oder 1 bedeutet.

2. Verbindungen nach Anspruch 1, **dadurch gekennzeichnet, dass** eines von R¹ und R² P-Sp- und das andere eine nicht polymerisierbare Gruppe bedeutet.

3. Verbindungen nach Anspruch 1 oder 2, **dadurch gekennzeichnet, dass** B 1,4-Phenylen bedeutet, das mit einer oder mehreren Gruppen L substituiert ist.

4. Verbindungen nach einem oder mehreren der Ansprüche 1 bis 3, **dadurch gekennzeichnet, dass** R¹ und/oder R² und/oder eine oder beide der Gruppen Sp eine chirale Gruppe sind.

5. Verbindungen nach einem oder mehreren der Ansprüche 1 bis 4, **dadurch gekennzeichnet, dass** sie aus den folgenden Formeln ausgewählt sind 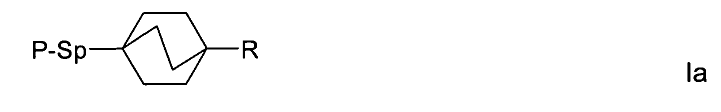 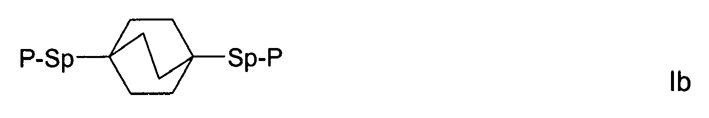 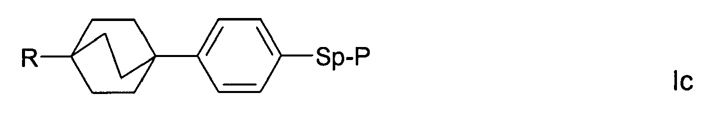 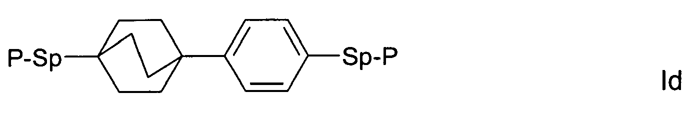 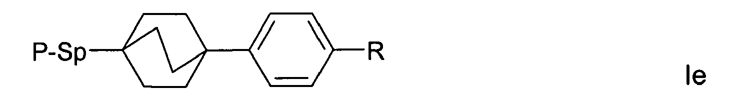 worin P und Sp wie in Anspruch 1 definiert sind, R eine der in Anspruch 1 angegebenen Bedeutungen von R¹ besitzt, die von P-Sp- verschieden ist, und der Phenylring durch eine oder mehrere Gruppen L wie in Anspruch 1 oder 3 definiert substituiert ist.

6. Verbindungen nach Anspruch 5, **dadurch gekennzeichnet, dass** sie aus den folgenden Formeln ausgewählt sind 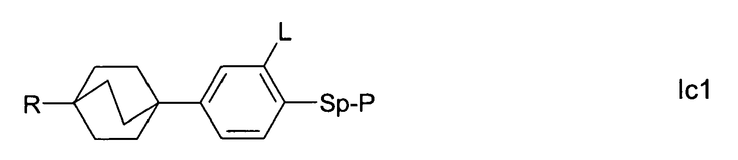 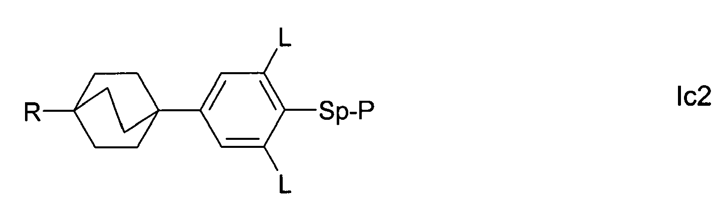 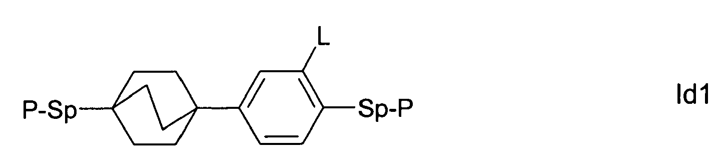 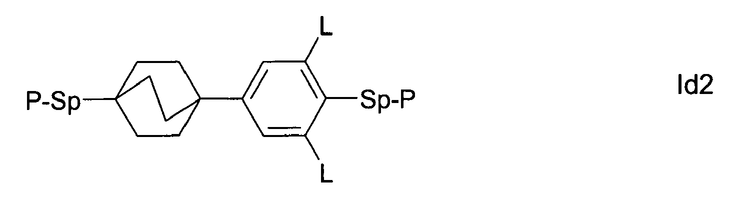 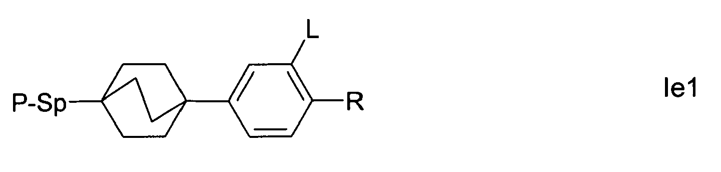 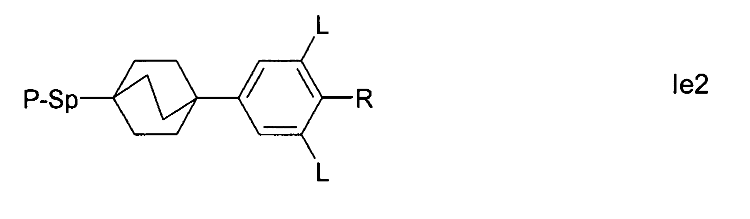 worin P, Sp und L wie in Anspruch 5 definiert sind.

7. Verbindungen nach Anspruch 5 oder 6, **dadurch gekennzeichnet, dass** Sp-P -COO-Alkylen-P oder -O-Alkylen-P bedeutet, worin "Alkylen" geradkettiges oder verzweigtes Alkylen mit 1 bis 12 C-Atomen bedeutet, das gegebenenfalls fluoriert ist.

8. Verbindungen nach einem oder mehreren der Ansprüche 5 bis 7, **dadurch gekennzeichnet, dass** P Acrylat oder Methacrylat bedeutet.

9. LC-Material enthaltend eine oder mehrere Verbindungen nach einem oder mehreren der Ansprüche 1 bis 8.

10. LC-Medium enthaltend die folgenden Komponenten:
a) eine oder mehrere nicht polymerisierbare, mesogene oder flüssigkristalline Verbindungen,
b) eine oder mehrere polymerisierbare mesogene oder flüssigkristalline Verbindungen nach einem oder mehreren der Ansprüche 1 bis 8,
c) gegebenenfalls eine oder mehrere zusätzliche polymerisierbare, mesogene oder flüssigkristalline Verbindungen,
worin die Mischung eine oder mehrere chirale Verbindungen enthält, bei denen es sich um Verbindungen der Komponenten a, b oder c handeln kann oder die eine zusätzliche Komponente d bilden können.

11. LC-Medium nach Anspruch 10, **dadurch gekennzeichnet, dass** es eine blaue Phase aufweist.

12. LC-Medium nach Anspruch 11, worin der Temperaturbereich der blauen Phase durch In-situ-Polymerisation der Komponente b und, wenn vorhanden, Komponente c bei einer Temperatur, bei der das nicht polymerisierte LC-Medium eine blaue Phase aufweist, erweitert wird.

13. Verfahren zur Stabilisierung der blauen Phase eines LC-Mediums durch Zugabe einer Komponente b) enthaltend eine oder mehrere polymerisierbare mesogene oder flüssigkristalline Verbindungen nach einem oder mehreren der Ansprüche 1 bis 8 und gegebenenfalls einer Komponente c) enthaltend eine oder mehrere zusätzliche polymerisierbare mesogene oder flüssigkristalline Verbindungen zum Medium und Polymerisieren der Komponente b und, wenn vorhanden, Komponente c, in situ bei einer Temperatur, bei der das nicht polymerisierte LC-Medium eine blaue Phase aufweist.

14. Elektrooptische Zelle enthaltend zwei planparallele Substrate, von denen mindestens eines für sichtbares Licht transparent ist und von denen mindestens eines eine Elektrodenschicht enthält, und weiterhin enthaltend ein LC-Medium nach einem oder mehreren der Ansprüche 10 bis 12.

15. Polymerisierbares LC-Material enthaltend eine oder mehrere Verbindungen nach einem oder mehreren der Ansprüche 1 bis 8 und gegebenenfalls enthaltend eine oder mehrere weitere Verbindungen, die polymerisierbar und/oder mesogen oder flüssigkristallin sein können.

16. Anisotropes Polymer erhältlich durch Polymerisieren einer Verbindung nach einem oder mehreren der Ansprüche 1 bis 8 oder eines LC-Materials nach Anspruch 15 in seinem ausgerichteten Zustand.

17. Verwendung einer Verbindung, eines Materials oder eines Polymers nach einem oder mehreren der Ansprüche 1 bis 16 in elektrooptischen Anzeigen, LCDs, optischen Folien, Polarisatoren, Kompensatoren, Strahlteilern, reflexiven Folien, Orientierungsschichten, Farbfiltern, holographischen Elementen, Heißprägefolien, farbigen Abbildungen, dekorativen oder Sicherheitsmarkierungen, LC-Pigmenten, Klebstoffen, Kosmetika, Diagnostika, in der nichtlinearen Optik, optischen Datenspeicherung, in elektronischen Vorrichtungen, organischen Halbleitern, Feldeffekttransistoren (field effect transistor - FET), Komponenten integrierter Schaltungen (integrated circuitry - IC), Dünnfilmtransistoren (thin film transistor - TFT), RFID-Tags (Radio Frequency Identification - RFID), organischen Leuchtdioden (organic light emitting diode - OLED), Elektrolumineszenzanzeigen, Beleuchtungsvorrichtungen, Photovoltaik-Vorrichtungen, Sensorvorrichtungen, Elektrodenmaterialien, Photoleitern, in der elektrophotographischen Aufzeichnung, in Lasermaterialien oder -vorrichtungen oder für polymerstabilisierte blaue Phasen.

18. Verfahren zur Herstellung einer Verbindung nach einem oder mehreren der Ansprüche 1 bis 8, indem man eine 4-substituierte Bicyclo[2.2.2]octan-1-carbonsäure oder ein Derivat dieser Säure mit einem ω-Halogenalkylalkohol verestert und das entstandene Produkt mit einer ungesättigten Carbonsäure oder einem Derivat dieser Säure umsetzt oder 4-substituiertes Bicyclo[2.2.2]octan-1-ol mit gegebenenfalls substituiertem Phenol umsetzt, das entstandene Produkt gegebenenfalls mit einem ω-Halogenalkylalkohol verestert und das entstandene Produkt mit einer ungesättigten Carbonsäure oder einem Derivat dieser Säure umsetzt.

## Revendications

1. Composés de la formule I
R¹-A-(B)_{b}-R² I
dans laquelle
R¹ et R² sont indépendamment l'un de l'autre choisis parmi alkyle ou alcoxy en chaîne droite ou ramifié avec 1 à 12 atomes de C qui est optionnellement fluoré, ou représentent P-Sp-, au moins l'un de R¹ et R² étant P-Sp,
R⁰ et R⁰⁰ indépendamment l'un de l'autre représentent H ou alkyle avec 1 à 12 atomes de C,
P est un groupe polymérisable,
Sp est un groupe espaceur ou une liaison simple,
A est 1,4-bicyclo[2.2.2]octylène,
B est 1,4-cyclohexylène, 1,4-phénylène qui est substitué avec un ou plusieurs groupes L, ou 1,4- bicyclo[2.2.2]octylène,
L est choisi parmi F, CI, Br, I, -CN, -NO₂ , -NCO, -NCS, -OCN, -SCN, -C(=O)NR⁰R⁰⁰, -C(=O)X, -C(=O)OR⁰, -C(=O)R⁰, -NR⁰R⁰⁰, -OH, -SF₅, silyle optionnellement substitué, aryle avec 1 à 12 atomes de C, et alkyle, alcoxy, alkylcarbonyle, alcoxycarbonyle, alkylcarbonlyoxy ou alcoxy- carbonyloxy en chaîne droite ou ramifié avec 1 à 12 atomes de C, dans lequel un ou plusieurs atomes de H sont optionnellement remplacés par F ou CI, dans lequel R⁰ et R⁰⁰ sont comme définis ci-dessus et X est halogène,
b est 0 ou 1.

2. Composés selon la revendication 1, **caractérisés en ce qu'**un de R¹ et R² est P-Sp- et l'autre est un groupe non polymérisable.

3. Composés selon la revendication 1 ou 2, **caractérisés en ce que** B est 1,4-phénylène qui est substitué avec un ou plusieurs groupes L .

4. Composés selon une ou plusieurs des revendications 1 à 3, **caractérisés en ce que** R¹ et/ou R² et/ou un des groupes Sp ou les deux sont un groupe chiral.

5. Composés selon une ou plusieurs des revendications 1 à 4, **caractérisés en ce qu'**ils sont choisis parmi les formules suivantes 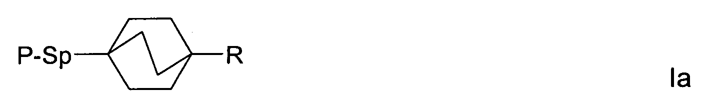 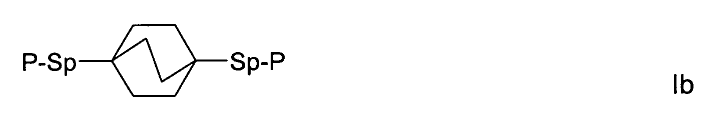 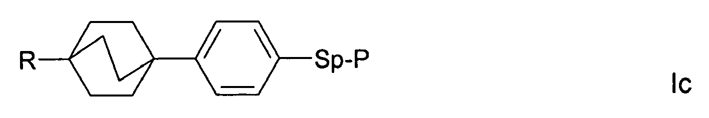 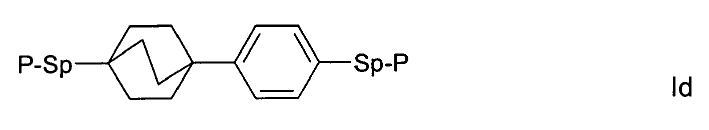 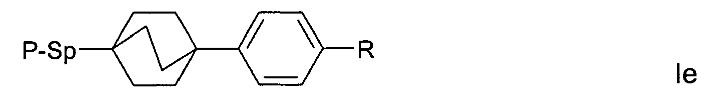 dans lesquelles P et Sp sont comme définis dans la revendication 1, R a l'une des significations de R¹ données dans la revendication 1 qui est différente de P-Sp-, et le cycle phényle est substitué par un ou plusieurs groupes L comme définis dans la revendication 1 ou 3.

6. Composés selon la revendication 5, **caractérisés en ce qu'**ils sont choisis parmi les formules suivantes 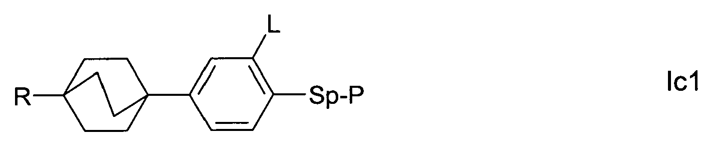 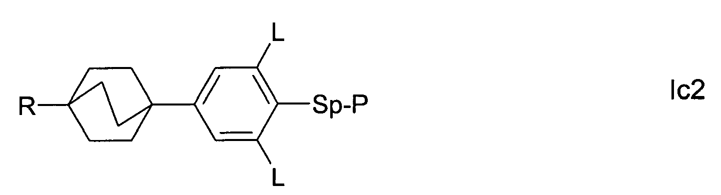 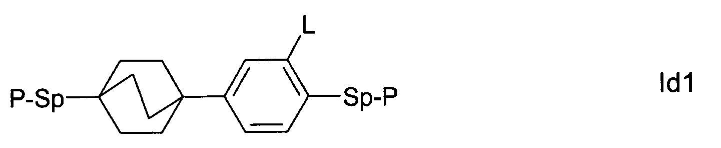 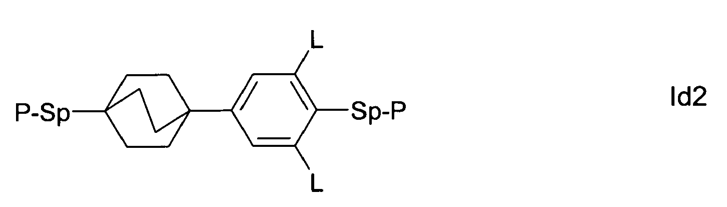 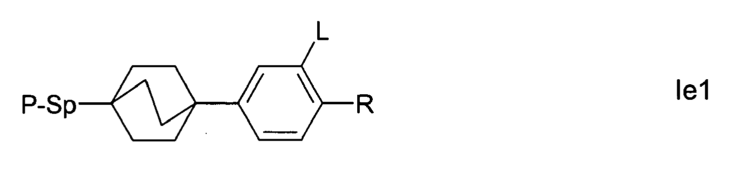 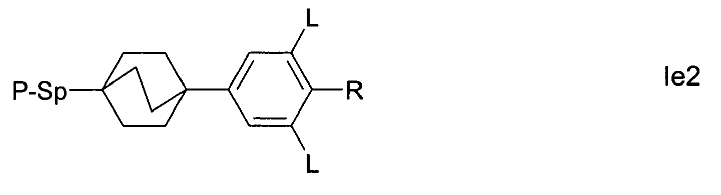 dans lesquelles P, Sp et L sont comme définis dans la revendication 5.

7. Composés selon la revendication 5 ou 6, **caractérisés en ce que** Sp-P est -COO-alkylène-P ou -O-alkylène-P, dans lesquels "alkylène" est alkylène en chaîne droite ou ramifié avec 1 à 12 atomes de C, qui est optionnellement fluoré.

8. Composés selon une ou plusieurs des revendications 5 à 7, **caractérisés en ce que** P est acrylate ou méthacrylate.

9. Matériau de cristal liquide comprenant un ou plusieurs composés selon une ou plusieurs des revendications 1 à 8.

10. Milieu de cristal liquide comprenant les composés suivants
a) un ou plusieurs composés mésogènes ou cristallins liquides non polymérisables,
b) un ou plusieurs composés mésogènes ou cristallins liquides polymérisables selon une ou plusieurs des revendications 1 à 8,
c) optionnellement un ou plusieurs composés mésogènes ou cristallins liquides polymérisables additionnels,
dans lequel ledit mélange comprend un ou plusieurs composés chiraux, qui peuvent être des composés des composants a, b ou c ou qui peuvent former un composant additionnel d.

11. Milieu de cristal liquide selon la revendication 10, **caractérisé en ce qu'**il a une phase bleue.

12. Milieu de cristal liquide selon la revendication 11, dans lequel la plage de températures de la phase bleue est élargie par polymérisation in situ du composant b, et si il est présent, du composant c, à une température à laquelle le milieu de cristal liquide non polymérisable présente une phase bleue.

13. Procédé de stabilisation de la phase bleue d'un milieu de cristal liquide par addition d'un composant b) comprenant un ou plusieurs composés mésogènes ou cristallins liquides polymérisables selon une ou plusieurs des revendications 1 à 8 et optionnellement d'un composant c) comprenant un ou plusieurs composés mésogènes ou cristallins liquides polymérisables additionnels au milieu, et par polymérisation du composant b), et si il est présent, du composant c), in situ à une température à laquelle le milieu de cristal liquide non polymérisable présente une phase bleue.

14. Cellule électro-optique comprenant deux substrats plan-parallèles, dont au moins l'un est transparent à la lumière visible, et dont ou moins l'un comprend une couche d'électrode, et comprenant en outre un milieu de cristal liquide selon une ou plusieurs des revendications 10 à 12.

15. Matériau de cristal liquide polymérisable comprenant un ou plusieurs composés selon une ou plusieurs des revendications 1 à 8 et comprenant optionnellement un ou plusieurs composés supplémentaires qui peuvent être polymérisables et/ou mésogènes ou cristallins liquides.

16. Polymère anisotrope pouvant être obtenu par polymérisation d'un composé selon une ou plusieurs des revendications 1 à 8 ou d'un matériau de cristal liquide selon la revendication 15 dans son état orienté.

17. Utilisation d'un composé, matériau ou polymère selon une ou plusieurs des revendications 1 à 16 dans des affichages électrooptiques, des LCDs, des films optiques, des polariseurs, des compensateurs, des séparateurs de faisceau, des films réfléchissants, des couches d'alignement, des filtres couleur, des éléments holographiques, des feuilles d'estampage à chaud, des images colorées, des marquages décoratifs ou de sécurité, des pigments de cristal liquide (LC), des adhésifs, des cosmétiques, des diagnostics, des optiques non linéaires, un stockage d'information optique, des dispositifs électroniques, des semiconducteurs organiques, des transistors à effet de champ (FET), des composants de circuit intégré (IC), des transistors à film mince (TFT), des étiquettes d'Identification Radiofréquence (RFID), des diodes émettrices de lumière organiques (OLED), des affichages électroluminescents, des dispositifs d'éclairage, des dispositifs photovoltaïques, des dispositifs de capteurs, des matériaux d'électrodes, des photoconducteurs, un enregistrement électrophotographique, des matériaux ou dispositifs d'effet laser, ou pour des phases bleues stabilisées par polymère.

18. Procédé pour préparer un composé selon une ou plusieurs des revendications 1 à 8, par
estérification d'un acide ou dérivé d'acide bicyclo[2.2.2]octane-1-carboxylique substitué en 4 avec un alcool de ω-halogénoalkyle, et par réaction du produit résultant avec un acide ou dérivé d'acide carboxylique non saturé, ou par réaction de bicyclo[2.2.2]octane-1-ol substitué en 4 avec phénol optionnellement substitué, par estérification optionnelle du produit résultant avec un alcool de co-halogénoalkyle, et par réaction du produit résultant avec un acide ou dérivé d'acide carboxylique non saturé.
